# EUROPEAN PATENT APPLICATION

(11) **EP 4 163 827 A1**
(43) Date of publication of application: **12.04.2023**
(21) Application number: 21833854.9
(22) Date of filing: 24.06.2021
(51) Int. Cl.: G06N 3/02

(54) **METHOD AND DEVICE FOR ACQUIRING NEURAL NETWORK**

(30) Priority: 30.06.2020 CN 202010615552
(71) Applicant: Huawei Technologies Co., Ltd., Longgang Shenzhen, Guangdong 518129 (CN)
(72) Inventor: LIANG, Jing, Shenzhen, Guangdong 518129 (CN); BI, Xiaoyan, Shenzhen, Guangdong 518129 (CN); LIU, Yong, Shenzhen, Guangdong 518129 (CN)
(74) Representative: Gill Jennings & Every LLP
(86) International application number: PCT/CN2021/102079
(87) International publication number: WO 2022/001822

(57) **Abstract**

This application provides a neural network obtaining method and apparatus, to reduce air interface overheads caused when a transmitter and a receiver download a neural network structure, parameter information, and the like. The method includes: determining, based on a standardized reference data set, at least one standardized reference neural network, and a standardized performance determining criterion, whether a constructed target neural network satisfies a preset output condition; outputting the target neural network when the output condition is satisfied; and optimizing the target neural network when the output condition is not satisfied until an obtained target neural network satisfies the output condition, where the target neural network is a transmitting-end target neural network used in a transmitter or a receiving-end target neural network used in a receiver.

## Description

This application claims priority to Chinese Patent Application No. 202010615552.9, filed with the China National Intellectual Property Administration on June 30, 2020 and entitled "NEURAL NETWORK OBTAINING METHOD AND APPARATUS", which is incorporated herein by reference in its entirety.

### TECHNICAL FIELD

This application relates to the field of artificial intelligence, and more specifically, to a neural network obtaining method and apparatus.

### BACKGROUND

In a communication system, a transmitter is configured to send a signal, and a receiver is configured to receive a signal sent by the transmitter. A neural network can be used in the transmitter and the receiver to jointly optimize both transmitting and receiving ends, so as to improve overall performance. Channel state information (channel state information, CSI) compression and reconstruction are used as examples. The transmitter may compress CSI based on the neural network, to generate air interface information. The receiver may parse the air interface information based on the neural network, to reconstruct a channel. In an implementation, a design of combining a transmitting end-neural network and a receiving-end neural network may be used to implement algorithm joint optimization, to obtain optimal compression and reconstruction algorithms.

However, in an actual commercial system, a receiver and a transmitter are usually provided by different vendors. For example, the transmitter is provided by a vendorA, and the receiver is provided by a vendor B. To resolve a joint optimization problem, in an implementation, a transmitter and a receiver separately download a neural network structure and parameter information that match a current usage scenario, and then perform processing at a receiving end and a transmitting end based on a downloaded neural network. This causes huge air interface overheads, and is greatly limited in actual use.

### SUMMARY

This application provides a neural network obtaining method and apparatus, to reduce huge air interface overheads caused when a transmitter and a receiver download a neural network structure, parameter information, and the like.

According to a first aspect, a neural network obtaining method is provided. The method includes: determining, based on a standardized reference data set, one or more reference neural networks, and a performance determining criterion, whether a constructed target neural network satisfies a preset output condition; and outputting the target neural network when the output condition is satisfied, where the output target neural network is a transmitting-end target neural network used in a transmitter or a receiving-end target neural network used in a receiver.

Based on the foregoing technical solution, the standardized reference data set, the standardized reference neural network, and the standardized performance determining criterion are introduced, so that an obtaining device can evaluate the target neural network based on the existing standardized reference neural network, and output the target neural network for use only when the target neural network satisfies the output condition. The output target neural network may be used in the transmitter or the receiver. Therefore, overheads of downloading, by the transmitter or the receiver, a neural network structure and parameter information through an air interface are avoided. In addition, interconnection between products of different vendors can be ensured. On the premise that performance is ensured, differentiated designs and competitiveness of the products of the different vendors can further be reflected. Therefore, on the whole, feasibility of implementing a dual network is greatly improved.

With reference to the first aspect, in some possible implementations of the first aspect, the method further includes: when the output condition is not satisfied, continuing to optimize the target neural network until an obtained target neural network satisfies the output condition.

In other words, when the output condition is not satisfied, the target neural network may continue to be optimized. The optimization may include but is not limited to adjusting a neural network structure design, adjusting the reference data set, adjusting a neural network training method, adjusting a definition of a cost function, a loss function, or an objective function, changing a neural network initialization method, changing a constraint condition of a neural network parameter, changing a definition of an activation function of the neural network, and the like.

Through optimization of the target neural network, the obtained optimized target neural network may continue to be evaluated based on the foregoing performance determining criterion. In this way, the optimized target neural network is output until the optimized target neural network satisfies the output condition.

With reference to the first aspect, in some possible implementations of the first aspect, the transmitting-end target neural network is used for constellation modulation, channel coding, precoding, or channel information extraction and compression; and the receiving-end target neural network is used for constellation demodulation, channel decoding, detection reception, or channel information reconstruction.

In other words, the target neural network may be used in various phases of communication. The transmitting-end target neural network and the receiving-end target neural network may be coupled to each other and work cooperatively. For example, the transmitting-end target neural network and the receiving-end target neural network that work cooperatively may be respectively used for constellation modulation and demodulation, channel coding and decoding, precoding and detection reception, or channel information extraction and compression and channel information reconstruction.

With reference to the first aspect, in some possible implementations of the first aspect, the method further includes: determining, in at least one set of standardized configurations, a configuration applicable to a current application scenario of the target neural network, where each set of standardized configurations includes one or more of the following: the standardized reference data set, the standardized reference neural network, a standardized data structure, a standardized performance measurement function, the standardized performance determining criterion, and a standardized implementable capability measurement value, where
the reference neural network includes a receiving-end reference neural network used in the receiver and/or a transmitting-end reference neural network used in the transmitter; the data structure is used to generate and/or parse air interface information; the performance measurement function is used to generate a performance measurement value; the performance determining criterion includes a performance indicator and the output condition of the target neural network, where the performance determining criterion is used to determine, based on the performance measurement value and the performance indicator, whether the target neural network satisfies the output condition; and the implementable capability measurement value is used to select a matching neural network and/or a matching performance indicator.

It should be understood that the matching neural network herein may specifically mean that the neural network can be used in the transmitter or the receiver under a given constraint, and the given constraint may include implementation complexity and/or air interface overheads. The matching performance indicator may be specifically a performance indicator used to evaluate the neural network in a phase of obtaining the neural network.

Different standardized configurations can be defined for different application scenarios. For example, in different application scenarios, performance determining criteria may be different; or reference neural networks may be different. Based on such a design, the output target neural network can match different application scenarios, so that obtaining of good system performance is facilitated.

Optionally, the performance measurement function includes one or more of the following: a mean square error, a normalized mean square error, a mean absolute error, a maximum absolute error, a correlation coefficient, a cross entropy, mutual information, a bit error rate, or a frame error rate.

The performance measurement functions listed above are merely examples, and shall not constitute any limitation on this application. One or more of the performance measurement functions may be used simultaneously for evaluating the target neural network. This is not limited in this application.

Optionally, the performance indicator includes one or more performance indicators, and the performance determining criterion includes determining, by comparing the performance measurement value with the one or more performance indicators, whether the output condition is satisfied.

It should be understood that there may be one or more performance indicators. There may also be one or more upper bounds and/or lower bounds of the corresponding one or more performance indicators.

The following shows several examples in which the target neural network is evaluated with reference to the foregoing performance determining criterion to determine whether the target neural network satisfies the output condition.

In a possible design, the target neural network is the transmitting-end target neural network, and the one or more reference neural networks are one or more receiving-end reference neural networks; and the determining, based on a standardized reference data set, one or more reference neural networks, and a performance determining criterion, whether a constructed target neural network satisfies a preset output condition includes: inputting, into the transmitting-end target neural network, transmitting-end data obtained from the reference data set, where the transmitting-end target neural network is configured to process the transmitting-end data based on a predefined data structure, to generate air interface information to be sent to the one or more receiving-end reference neural networks; obtaining one or more output results from the one or more receiving-end reference neural networks, where the one or more output results are obtained by the one or more receiving-end reference neural networks separately based on the received air interface information; using the one or more output results and the transmitting-end data as input into the performance measurement function, to obtain one or more performance measurement values; and determining, based on the one or more performance measurement values and the performance determining criterion, whether the target neural network satisfies the output condition.

That is, the transmitting-end target neural network and the receiving-end reference neural network are cascaded to evaluate the receiving-end target neural network.

In another possible design, the target neural network is the transmitting-end target neural network, and the one or more reference neural networks are one or more transmitting-end reference neural networks; and the determining, based on a standardized reference data set, one or more reference neural networks, and a performance determining criterion, whether a constructed target neural network satisfies a preset output condition includes: inputting, into the transmitting-end target neural network, transmitting-end data obtained from the reference data set, where the transmitting-end target neural network is configured to process the transmitting-end data based on a predefined data structure, to generate target air interface information; inputting the transmitting-end data into the one or more transmitting-end reference neural networks, where the one or more transmitting-end reference neural networks are configured to process the transmitting-end data based on the predefined data structure to generate one or more pieces of reference air interface information; using the one or more pieces of reference air interface information and the target air interface information as input into the performance measurement function, to obtain one or more performance measurement values; and determining, based on the one or more performance measurement values and the performance determining criterion, whether the transmitting-end target neural network satisfies the output condition.

That is, the transmitting-end reference neural network is used as a reference to evaluate the transmitting-end target neural network.

In still another possible design, the target neural network is the receiving-end target neural network, and the one or more reference neural networks are one or more transmitting-end reference neural networks; and the determining, based on a standardized reference data set, one or more reference neural networks, and a performance determining criterion, whether a constructed target neural network satisfies a preset output condition includes: inputting transmitting-end data obtained from the reference data set into the one or more transmitting-end reference neural networks, where the one or more transmitting-end reference neural networks are configured to process the transmitting-end data based on a predefined data structure, to obtain one or more pieces of air interface information to be sent to the receiving-end target neural network; obtaining one or more output results from the receiving-end target neural network, where the one or more output results are output results separately generated by the receiving-end target neural network based on the received one or more pieces of air interface information; using the one or more output results and the transmitting-end data as input into the performance measurement function, to obtain one or more performance measurement values; and determining, based on the one or more performance measurement values and the performance determining criterion, whether the receiving-end target neural network satisfies the output condition.

That is, the receiving-end target neural network and the transmitting-end reference neural network are cascaded to evaluate the receiving-end target neural network.

In still another possible design, the target neural network is the receiving-end target neural network, and the one or more reference neural networks include one or more transmitting-end reference neural networks and one or more receiving-end reference neural networks; and the determining, based on a standardized reference data set, one or more reference neural networks, and a performance determining criterion, whether a constructed target neural network satisfies a preset output condition includes: inputting transmitting-end data obtained from the reference data set into the one or more transmitting-end reference neural networks, where the one or more transmitting-end reference neural networks are configured to process the transmitting-end data based on a predefined data structure, to obtain one or more pieces of air interface information to be sent to the receiving-end target neural network and the one or more receiving-end reference neural networks; obtaining one or more target output results from the receiving-end target neural network, where the one or more target output results are output results separately generated by the receiving-end target neural network based on the received one or more pieces of air interface information; obtaining one or more reference output results from the one or more receiving-end reference neural networks, where the one or more reference output results are output results generated by the one or more receiving-end reference neural networks respectively based on the received one or more pieces of air interface information; using the one or more target output results and the one or more reference output results as input into the performance measurement function, to obtain one or more performance measurement values; and determining, based on the one or more performance measurement values and the performance determining criterion, whether the receiving-end target neural network satisfies the output condition.

That is, the receiving-end target neural network and the transmitting-end reference neural network are cascaded, and the receiving-end reference neural network is used as a reference to evaluate the receiving-end target neural network.

With reference to the first aspect, in some possible implementations of the first aspect, the implementable capability measurement value includes one or more of the following: air interface information overheads, an amount of computation required for implementing the neural network, a quantity of parameters stored for implementing the neural network, and computation precision required for implementing the neural network.

Therefore, based on implementation complexity of different applications, a matching neural network may be selected to work, or a matching performance indicator may be selected for evaluation.

According to a second aspect, a communication method is provided. The method includes: A first device determines a scenario mode based on an air interface transmission condition between the first device and a second device, where the scenario mode is used to determine a neural network usable in the current air interface transmission condition, the neural network is determined in a plurality of neural networks designed in advance, and each of the plurality of neural networks matches one or more scenario modes; and the first device sends indication information of the scenario mode to the second device.

Based on the foregoing method, the first device may select an appropriate scenario mode based on a current air interface transmission condition between the first device and the second device, and indicate the scenario mode to the second device, so that the first device and the second device determine, based on a same scenario mode, a neural network to be used to work. In this way, performance is improved.

With reference to the second aspect, in some possible implementations of the second aspect, the method further includes: The first device receives acknowledgment information from the second device, where the acknowledgment information indicates that the indication information of the scenario mode is successfully received.

The second device may send the acknowledgment information to the first device based on successful reception of the indication information, so that the first device performs a subsequent procedure based on a reception status of the indication information. For example, when the indication information is successfully received, the neural network matching the scenario mode is used to work; or when the indication information is not successfully received, the indication information of the scenario mode is resent. This is not limited in this application.

With reference to the second aspect, in some possible implementations of the second aspect, the method further includes: The first device communicates with the second device by using the neural network matching the scenario mode.

Based on successful reception of the indication information by the second device, the first device may use the neural network matching the scenario mode to work. Alternatively, based on successful reception of the indication information, the second device may determine and use the neural network matching the indicated scenario mode to work, so that two mutually coupled neural networks can work cooperatively. Therefore, system performance is improved.

According to a third aspect, a communication method is provided. The method includes: A second device receives indication information of a scenario mode from a first device, where the scenario mode is used to determine a neural network usable in a current air interface transmission condition, the neural network is determined in a plurality of neural networks designed in advance, and each of the plurality of neural networks matches one or more scenario modes; the second device determines the scenario mode based on the indication information of the scenario mode; and the second device determines, based on the scenario mode, the neural network usable in the air interface transmission condition.

Based on the foregoing method, the first device may select an appropriate scenario mode based on a current air interface transmission condition between the first device and the second device, and indicate the scenario mode to the second device, so that the first device and the second device determine, based on a same scenario mode, a neural network to be used to work. In this way, performance is improved.

With reference to the third aspect, in some possible implementations of the third aspect, the method further includes: The second device sends acknowledgment information to the first device, where the acknowledgment information indicates that the indication information of the scenario mode is successfully received.

The second device may send the acknowledgment information to the first device based on successful reception of the indication information, so that the first device performs a subsequent procedure based on a reception status of the indication information. For example, when the indication information is successfully received, the neural network matching the scenario mode is used to work; or when the indication information is not successfully received, the indication information of the scenario mode is resent. This is not limited in this application.

With reference to the third aspect, in some possible implementations of the third aspect, the method further includes: The second device communicates with the first device by using the neural network matching the scenario mode.

Based on successful reception of the indication information by the second device, the first device may use the neural network matching the scenario mode to work. Alternatively, based on successful reception of the indication information, the second device may determine and use the neural network matching the indicated scenario mode to work, so that two mutually coupled neural networks can work cooperatively. Therefore, system performance is improved.

With reference to the second aspect or the third aspect, in some possible implementations, each of the plurality of neural networks is a neural network obtained based on a standardized reference data set, a standardized reference neural network, and a standardized performance determining criterion.

In other words, the neural network used in the first device and the second device may be the target neural network obtained according to the method in the first aspect.

With reference to the second aspect or the third aspect, in some possible implementations, the first device is a network device, and the second device is a terminal device; or the first device is a terminal device, and the second device is a network device.

That is, the determining of the air interface transmission condition and the selection of the scenario mode may be performed by the network device, or may be performed by the terminal device. This is not limited in this application.

It should be understood that the methods in the second aspect and the third aspect may be used in combination with the method in the first aspect, or may be used independently. This is not limited in this application.

It should be further understood that, in the foregoing example, the neural network matching the scenario mode is determined between the first device and the second device by using the indication information of the scenario mode. However, this shall not constitute any limitation on this application. In another possible implementation method, the determining of the air interface transmission condition and the selection of the scenario mode may not be indicated by using signaling interaction. For example, the network device and the terminal device may separately perform neural network adaptation based on a preset matching relationship between a neural network and a combination of an air interface transmission condition and scenario mode selection. This is also not limited in this application.

According to a fourth aspect, a neural network obtaining apparatus is provided. The apparatus includes each module or unit configured to perform the method in any possible implementation of the first aspect.

According to a fifth aspect, a neural network obtaining apparatus is provided. The apparatus includes a processor. The processor is coupled to a memory, and may be configured to execute instructions or data in the memory, to implement the method in any possible implementation of the first aspect. Optionally, the apparatus further includes the memory. Optionally, the apparatus further includes an input/output interface, and the processor is coupled to the input/output interface.

According to a sixth aspect, a communication apparatus is provided. The apparatus includes each module or unit configured to perform the method in any possible implementation of the second aspect.

According to a seventh aspect, a communication apparatus is provided. The apparatus includes a processor. The processor is coupled to a memory, and may be configured to execute instructions or data in the memory, to implement the method in any possible implementation of the second aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

According to an eighth aspect, a communication apparatus is provided. The apparatus includes each module or unit configured to perform the method in any possible implementation of the third aspect.

According to a ninth aspect, a communication apparatus is provided. The apparatus includes a processor. The processor is coupled to a memory, and may be configured to execute instructions or data in the memory, to implement the method in any possible implementation of the third aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to a tenth aspect, a processor is provided. The processor includes an input circuit, an output circuit, and a processing circuit. The processing circuit is configured to: receive a signal through the input circuit; and transmit a signal through the output circuit, so that the processor performs the method according to any possible implementation of the first aspect to the third aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to an eleventh aspect, a processing apparatus is provided. The apparatus includes a processor and a memory. The processor is configured to: read instructions stored in the memory, receive a signal through a receiver, and transmit a signal through a transmitter, to perform the method in any possible implementation of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the eleventh aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (which may also be referred to as code or instructions). When the computer program is run, a computer is enabled to perform the method in any one of the possible implementations of the first aspect to the third aspect.

According to a thirteenth aspect, a computer-readable storage medium is provided. The computer-readable storage medium stores a computer program (which may also be referred to as code or instructions). When the computer program is run on a computer, the computer is enabled to perform the method in any possible implementation of the first aspect to the third aspect.

According to a fourteenth aspect, a communication system is provided. The communication system includes the foregoing network device and terminal device, where the foregoing target neural network may be separately configured for the network device and the terminal device.

### BRIEF DESCRIPTION OF DRAWINGS

FIG. 1 shows a communication system that can perform communication by using a neural network according to an embodiment of this application;
FIG. 2 is a schematic diagram of a signal processing process performed by a transmitter and a receiver for which a neural network is configured;
FIG. 3 is a schematic diagram of a deep neural network (deep neural network, DNN);
FIG. 4 is a schematic diagram of a convolutional neural network (convolutional neural network, CNN);
FIG. 5 is a schematic diagram of a recurrent neural network (recurrent neural network, RNN);
FIG. 6 to FIG. 14 each are a schematic flowchart of a neural network training method in a communication system according to an embodiment of this application;
FIG. 15 and FIG. 16 each are a schematic flowchart of a communication method according to an embodiment of this application;
FIG. 17 and FIG. 18 each are a schematic block diagram of a neural network obtaining apparatus according to an embodiment of this application;
FIG. 19 and FIG. 20 each are a schematic block diagram of a communication apparatus according to an embodiment of this application;
FIG. 21 is a schematic diagram of a structure of a terminal device according to an embodiment of this application; and
FIG. 22 is a schematic diagram of a structure of a network device according to an embodiment of this application.

### DESCRIPTION OF EMBODIMENTS

The following describes technical solutions of this application with reference to accompanying drawings.

A communication method provided in this application may be applied to various communication systems, such as a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future fifth generation (5th Generation, 5G) mobile communication system, or a new radio access technology (new radio access technology, NR) system. The 5G mobile communication system may include a non-standalone (non-standalone, NSA) communication system and/or a standalone (standalone, SA) communication system.

The communication method provided in this application may be further applied to machine type communication (machine type communication, MTC), long term evolution-machine (Long Term Evolution-machine, LTE-M), a device to device (device to device, D2D) network, a machine to machine (machine to machine, M2M) network, an internet of things (internet of things, loT) network, or another network. The loT network may include, for example, an internet of vehicles. Communication modes in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The communication method provided in this application may be further applicable to a future communication system, for example, a 6th generation mobile communication system. This is not limited in this application.

In embodiments of this application, a network device may be any device having a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group (including a plurality of antenna panels) of antenna panels of a gNB in a 5G system, or may be a network node, such as a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that, the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are usable for providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data connectivity for a user, for example, a handheld device having a wireless connection function or a vehicle-mounted device. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In addition, the terminal device may alternatively be a terminal device in an internet of things (internet of things, loT) system. IoT is an important part in future development of information technologies. A main technical feature of the loT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology.

In addition, the terminal device may alternatively include sensors such as an intelligent printer, a train detector, and a gas station, and main functions include: collecting data (for some terminal devices), receiving control information and downlink data of a network device, sending an electromagnetic wave, and transmitting uplink data to the network device.

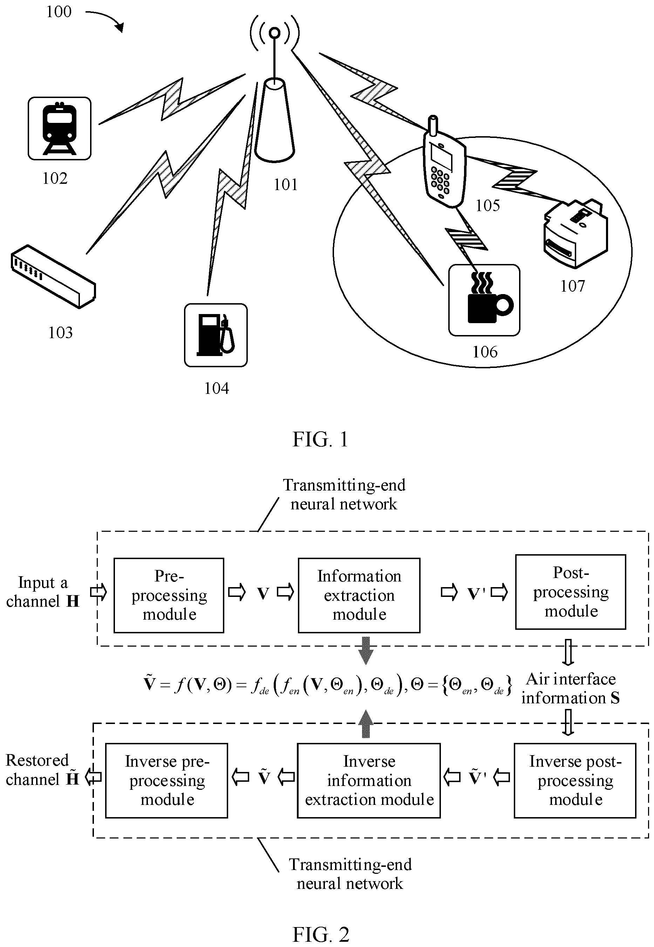

To facilitate understanding of embodiments of this application, a communication system usable in the communication method provided in embodiments of this application is first described in detail with reference to FIG. 1. As shown in FIG. 1, the communication system 100 may include at least one network device such as a network device 101 shown in FIG. 1. The communication system 100 may further include at least one terminal device such as terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a particular geographic area, and may communicate with a terminal device located in the coverage area. For example, the network device may send configuration information to the terminal device, and the terminal device may send uplink data to the network device based on the configuration information. For another example, the network device may send downlink data to the terminal device. Therefore, a communication system includes the network device 101 and the terminal devices 102 to 107 in FIG. 1.

Optionally, the terminal devices may directly communicate with each other. For example, the direct communication between the terminal devices may be implemented by using a D2D technology. As shown in the figure, the terminal devices 105 and 106 may directly communicate with each other by using the D2D technology, and the terminal devices 105 and 107 may directly communicate with each other by using the D2D technology. The terminal devices 106 and 107 may separately or simultaneously communicate with the terminal device 105.

The terminal devices 105 to 107 may further communicate with the network device 101 separately. For example, direct communication with the network device 101 may be implemented. For example, the terminal devices 105 and 106 may directly communicate with the network device 101 in the figure. Alternatively, indirect communication with the network device 101 may be implemented. For example, the terminal device 107 communicates with the network device 101 through the terminal device 105 in the figure.

It should be understood that, by way of example, FIG. 1 shows one network device, a plurality of terminal devices, and communication links between the communication devices. Optionally, the communication system 100 may include a plurality of network devices, and coverage of each network device may include another quantity of terminal devices, for example, more or fewer terminal devices. This is not limited in this application.

A plurality of antennas may be configured for each of the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device additionally includes a transmitter and a receiver. A person of ordinary skill in the art may understand that the transmitter and the receiver each may include a plurality of components related to signal sending and receiving (for example, a processor, a modulator, a multiplexer, a demodulator, a demultiplexer, or an antenna). Therefore, the network device and the terminal device may communicate with each other by using a multiple-antenna technology.

Optionally, the communication system 100 may further include another network entity, for example, a network controller or a mobility management entity. This is not limited in this embodiment of this application.

It should be understood that in the communication system 100 shown in FIG. 1, any one of the network device 101 and the terminal devices 102 to 107 may be used in the following plurality of possible scenarios: modulation and demodulation, coding and decoding, precoding and detection reception, channel information extraction and compression, channel information reconstruction, and the like. It should be understood that the foregoing listed scenarios are merely examples, and should not constitute any limitation on this application. This application includes but is not limited thereto.

Specifically, the transmitter in the network device may be configured to modulate a signal, and the receiver in the terminal device may be configured to demodulate a modulated signal. The transmitter in the network device may be configured to encode a signal, and the receiver in the terminal device may be configured to decode an encoded signal. The transmitter in the network device may be configured to precode a signal, and the receiver in the terminal device may be configured to detect a precoded signal. The transmitter in the terminal device may be configured to compress channel information, and the receiver in the network device may be configured to reconstruct a channel based on compressed channel information.

In the communication method provided in embodiments of this application, both the network device and the terminal device may work by using a neural network. The neural network used in the network device and the terminal device may be obtained based on a neural network obtaining method provided in embodiments of this application. For example, a transmitting-end neural network obtained by using the neural network obtaining method provided in embodiments of this application is used in the transmitter of the network device, and a receiving-end neural network obtained by using the neural network obtaining method provided in embodiments of this application is used in the receiver of the terminal device; and/or a transmitting-end neural network obtained by using the neural network obtaining method provided in embodiments of this application is used in the receiver of the terminal device, and a receiving-end neural network obtained by using the neural network obtaining method provided in embodiments of this application is used in the transmitter of the network device.

Therefore, the transmitter in the network device and the receiver in the terminal device may be jointly optimized based on the neural networks, or the transmitter in the terminal device and the receiver in the network device may be jointly optimized based on the neural networks. Therefore, performance of the communication system can be improved.

FIG. 2 shows a signal processing process performed by a transmitter and a receiver for which a neural network is configured. FIG. 2 shows a signal processing process of a transmitter using a neural network and a receiver using the neural network, by using channel information extraction and compression and channel information reconstruction as examples.

As shown in FIG. 2, a transmitting-end neural network configured to extract and compress channel information may include a pre-processing module, an information extraction module, and a post-processing module. However, this shall not constitute any limitation on this application. The transmitting-end neural network configured to extract and compress channel information may not include the pre-processing module, but include the information extraction module and the post-processing module; or may not include the pre-processing module and the post-processing module, but include the information extraction module. It should be understood that modules specifically included in the transmitting-end neural network may be defined based on different designs. This is not limited in this application.

A receiving-end neural network configured to reconstruct the channel information may include an inverse pre-processing module, an inverse information extraction module, and an inverse post-processing module. However, this shall not constitute any limitation on this application. The receiving-end neural network configured to reconstruct the channel information may not include the inverse pre-processing module, but may include the inverse information extraction module and the inverse post-processing module; or may not include the inverse pre-processing module and the inverse post-processing module, but include the inverse information extraction module. It should be understood that modules specifically included in the receiving-end neural network may be defined based on different designs. This is not limited in this application.

Several possible structures of the transmitting-end neural network and the receiving-end neural network are listed below.

A first possible structure of the transmitting-end neural network configured to extract and compress the channel information is that the transmitting-end neural network includes the pre-processing module, the information extraction module, and the post-processing module. The pre-processing module may be configured to pre-process, based on a standardized data structure, original data input into the transmitting-end target neural network. The information extraction module may be configured to extract information from pre-processed data, so as to compress the pre-processed data to obtain compressed data. The post-processing module may be configured to perform quantization and bit mapping on the compressed data based on the standardized data structure, to generate air interface information.

A second possible structure of the transmitting-end neural network configured to extract and compress the channel information is that the transmitting-end neural network includes the information extraction module and the post-processing module. In other words, the transmitting-end target neural network may not include the pre-processing module. The pre-processing module may be configured in the transmitter, and may be configured to pre-process, based on the standardized data structure, original data input into the transmitter. Pre-processed data is input into the transmitting-end neural network. The information extraction module in the transmitting-end neural network may be configured to extract information from the pre-processed data, so as to compress the pre-processed data to obtain compressed data. The post-processing module may be configured to perform quantization and bit mapping on the compressed data based on the standardized data structure, to generate air interface information.

A third possible structure of the transmitting-end neural network configured to extract and compress the channel information is that the transmitting-end neural network includes the information extraction module. In other words, the transmitting-end neural network may not include the pre-processing module and the post-processing module. The pre-processing module and the post-processing module may be configured in the transmitter. The pre-processing module may be configured to pre-process, based on the standardized data structure, original data input into the transmitter. Pre-processed data is input into the transmitting-end neural network. The information extraction module in the transmitting-end neural network is configured to extract information from the pre-processed data, so as to compress the pre-processed data to obtain compressed data. The compressed data may be input into the post-processing module, and the post-processing module may be configured to perform quantization and bit mapping on the compressed data based on the standardized data structure, to generate air interface information. A first possible structure of the receiving-end neural network configured to reconstruct the channel information is that the receiving-end neural network includes the inverse post-processing module, the inverse information extraction module, and the inverse pre-processing module. The inverse post-processing module may be configured to parse, based on the standardized data structure, the air interface information input into the receiving-end target neural network, to obtain compressed data. The inverse information extraction module may be configured to process the compressed data to obtain the data before being compressed. The inverse pre-processing module may be configured to process the data before being compressed, to obtain the original data.

A second possible structure of the receiving-end neural network configured to reconstruct the channel information is that the receiving-end neural network includes the inverse information extraction module and the inverse post-processing module. In other words, the receiving-end neural network may not include the inverse pre-processing module. The inverse pre-processing module may be configured in the receiver. The inverse post-processing module in the receiving-end neural network may be configured to parse, based on the standardized data structure, the air interface information input into the receiving-end target neural network, to obtain compressed data. The inverse information extraction module may be configured to process the compressed data to obtain the data before being compressed. The data before being compressed may be input into the inverse pre-processing module, and the inverse pre-processing module may be configured to process the data before being compressed, to obtain the original data.

A third possible structure of the receiving-end target neural network configured to reconstruct the channel information is that the receiving-end target neural network includes the inverse information extraction module. In other words, the receiving-end neural network may not include the inverse pre-processing module and the inverse post-processing module. The inverse pre-processing module and the inverse post-processing module may be configured in the receiver. The inverse post-processing module may be configured to parse, based on the standardized data structure, the air interface information input into the receiver to obtain compressed data. The compressed data may be input into the receiving-end neural network. The inverse information extraction module in the receiving-end neural network may be configured to process the compressed data, to obtain the data before being compressed. The compressed data may be obtained by processing the received air interface information based on the standardized data structure. The data before being compressed may be input into the inverse pre-processing module, and the inverse pre-processing module may be configured to process the data before being compressed, to obtain the original data.

It should be understood that the foregoing listed several possible structures are merely examples, and should not constitute any limitation on this application.

It should be understood that the pre-processing, information processing, and post-processing need to be performed based on the standardized data structure. Correspondingly, the inverse post-processing, inverse information extraction, and inverse pre-processing also need to be performed based on the standardized data structure consistent with that at the transmitting end, so as to ensure that the receiving end provides reliable parsing of the air interface information.

The inverse pre-processing module may be considered as an inverse processing module of the pre-processing module, the inverse information extraction module may be considered as an inverse processing module of the information extraction module, and the inverse post-processing module may be considered as an inverse processing module of the post-processing module. In other words, behaviors of the modules in the transmitter and the modules in the receiver are inverse.

It should be further understood that the modules included in the transmitting-end neural network and the receiving-end neural network listed above are named only for ease of understanding, and shall not constitute any limitation on this application. For example, the pre-processing module may also be referred to as a pre-conditioning module, and the post-processing module may also be referred to as a quantization module.

FIG. 2 is a schematic diagram of channel information extraction and compression and channel information reconstruction. Channel information shown in FIG. 2 is a channel **H.** After obtaining the channel **H,** the transmitter may first input the channel **H** into the pre-processing module, and the pre-processing module performs pre-processing on the channel **H** to obtain pre-processed channel feature information **V.** For example, singular value decomposition is performed on the channel **H** to obtain an eigenvector, or space-frequency domain transformation is performed on the channel **H** to obtain an angle-delay spectrum. **V** may be understood as a channel obtained after the pre-processing. The pre-processed channel feature information **V** is input into the information extraction module, and the information extraction module may extract information from the channel feature information **V** based on a pre-designed algorithm, to obtain a compressed channel feature information **V'**. For example, the compressed channel feature information **V'** is obtained based on a function *fₑₙ*(**V***,* Θ*ₑₙ*). The compressed channel feature information **V'** is input into the post-processing module, and the post-processing module may perform quantization and bit mapping on the compressed channel feature information **V'** based on a predefined data structure, to generate air interface information **S.**

After receiving the air interface information **S**, the receiver may input the air interface information S into the inverse post-processing module in the receiver. The inverse post-processing module may process the air interface information S based on the predefined data structure to restore compressed channel feature information **Ṽ'**. The compressed channel feature information **Ṽ'** is input into the inverse information extraction module, and the inverse information extraction module may process the channel feature information **Ṽ'** based on an algorithm corresponding to the information extraction module in the transmitter, so as to restore channel feature information **Ṽ** before being compressed. For example, the channel feature information **Ṽ** is restored based on a function *f_{de}*(*fₑₙ*(**V**,Θ*ₑₙ*),Θ*_{de}*). The channel feature information **Ṽ** is input into the inverse pre-processing module, and the inverse pre-processing module may restore a channel **H̃** after processing the channel feature information **Ṽ** . It should be understood that the restored channel **H̃** is an estimated value of the channel H input into the transmitter. As shown in the figure, processing performed by the transmitting-end neural network and the receiving-end neural network on the input data may be expressed by using the following function: **Ṽ =** *f*(**V,**Θ)= *f_{de}*(*fₑₙ*(**V**,Θₑₙ),Θ*_{de}*), where Θ={Θ*ₑₙ*,Θ*_{de}*}.

It should be noted that in the foregoing process, the pre-processing module and the inverse pre-processing module need to work based on a consistent rule, the information extraction module and the inverse information extraction module need to work based on a consistent rule, and the post-processing module and the inverse post-processing module need to work based on a consistent rule, to ensure that the transmitting-end neural network and the receiving-end neural network can work cooperatively. "Consistent" herein means that two parties may be designed based on a consistent rule, but does not mean that the two parties use a same algorithm, a same data structure, or the like to process data. "Work based on a consistent rule" aims to emphasize that algorithms and data structures used by both parties to process data correspond to each other.

For example, the post-processing module in the transmitter performs quantization and bit mapping on the compressed channel **V'** based on a specific data structure, to generate the air interface information **S;** and the inverse post-processing module in the receiver needs to restore the channel feature information **Ṽ'** to the maximum extent based on the air interface information **S** and a corresponding data structure.

For another example, the information extraction module in the transmitter compresses the channel feature information **V** based on a specific algorithm, to obtain the compressed channel feature information **V'**; and the inverse information extraction module in the receiver needs to process the compressed channel feature information **V'** based on a corresponding algorithm, to restore, to the maximum extent, the channel feature information **Ṽ** before being compressed.

It should be understood that, as an example of the channel information, the channel **H** shown in FIG. 2 is merely an example for ease of understanding, and should not constitute any limitation on this application. Both the channel **H** and the channel feature information **V** listed above may be used as examples of the channel information. Due to different designs of the modules included in the neural network, channel information input into the transmitting-end neural network may be the channel **H,** or may be the channel feature information **V.** Output of the transmitting-end neural network may be the compressed channel feature information **V',** or may be the air interface information **S.** Input of the receiving-end neural network may be the air interface information **S**, or may be the compressed channel feature information **Ṽ'** that is restored based on the air interface information **S.** Channel information output from the receiving-end neural network may be the restored channel feature information **Ṽ**, or may be the restored channel **H̃**. In addition, because structures of the receiving-end neural network and the transmitting-end neural network are not necessarily completely symmetric, definitions of the channel information may also be different. For example, channel information input into the transmitting-end neural network may be the channel **H,** and channel information output by the receiving-end neural network may be the restored channel feature information **Ṽ**.

Based on different channel information, corresponding variations may be made to the function **Ṽ =** *f*(**V**,Θ)= *f_{de}*(*fₑₙ*(**V**,Θ*ₑₙ*),Θ*_{de}*) described above with reference to FIG. 2. For example, a function may be expressed as **Y** = *f*(**X**,Θ)= *f_{de}*(*fₑₙ*(**X**,Θ*ₑₙ*),Θ*_{de}*). **X** represents channel information input into the transmitting-end neural network, and **Y** represents channel information output by the receiving-end neural network. For example, **X** may be **H** or **V**, and **Y** may be **H̃** or **Ṽ**.

It should be further understood that the transmitting-end neural network described above with reference to FIG. 2 is a neural network configured to extract and compress channel information, and modules included in the transmitting-end neural network are related to channel information extraction and compression processes. The receiving-end neural network described above with reference to FIG. 2 is a neural network used to reconstruct channel information, and modules included in the receiving-end neural network are also related to a channel information reconstruction process. Modules included in the transmitting-end neural network and the receiving-end neural network may be different in other signal processing phases, such as coding and decoding, constellation modulation and demodulation, precoding, and detection reception. For brevity, examples are not listed one by one herein.

In actual commercial use, the transmitter and the receiver may be provided by different vendors. To satisfy the foregoing requirements, the transmitter or the receiver may need to download, from a peer end, a neural network structure and parameter information that match a current scenario; or the transmitter and the receiver download, from a network virtual processing node, a neural network structure and parameter information that match a current scenario. For example, a rule for generating and parsing air interface information is downloaded. For another example, parameter and structure descriptions of the neural network used in the transmitter to extract and compress information on the channel **H** are downloaded. This may cause high air interface signaling overheads.

In view of this, this application provides a neural network obtaining method in a communication system, to reduce huge air interface overheads caused when a transmitter and a receiver download a neural network structure and parameter information.

To better understand embodiments of this application, the following briefly describes terms used in this specification.
1. Neural network (neural network, NN): As an important branch of artificial intelligence, the neural network is a network structure that imitates an animal neural network behavior feature to perform information processing. A neural network structure includes a large quantity of nodes (or referred to as neurons) connected to each other. Input information is learned and trained based on a specific operation model to process information. One neural network includes an input layer, a hidden layer, and an output layer. The input layer is responsible for receiving an input signal. The output layer is responsible for outputting a calculation result of the neural network. The hidden layer is responsible for complex functions such as feature expression, and a function of the hidden layer is represented by a weight matrix and a corresponding activation function.

A deep neural network (deep neural network, DNN) is usually a multi-layer structure. Increasing the depth and width of a neural network can improve its expression capability and provide more powerful information extraction and abstract modeling capabilities for a complex system.

The DNN may be constructed in a plurality of manners, for example, may include but is not limited to a recurrent neural network (recurrent neural network, RNN), a convolutional neural network (convolutional neural network, CNN), and a fully-connection neural network.

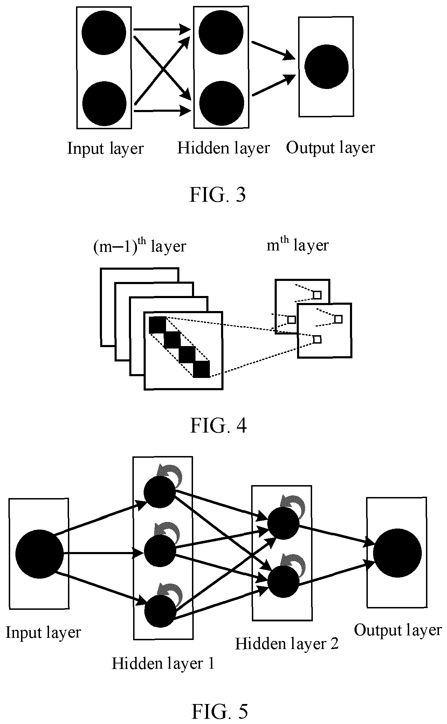

FIG. 3 is a schematic diagram of a feedforward neural network (feedforward neural network, FNN). As shown in the figure, different boxes represent different layers. For example, from left to right, the first layer is an input layer (input layer), the second layer is a hidden layer (hidden layer), and the third layer is an output layer (output layer). The DNN usually further includes a plurality of hidden layers, and functions of the hidden layers are extracting feature information to different degrees. The output layer may be configured to obtain required output information through mapping from the extracted feature information. Each black circle in the figure may represent one neuron, and neurons in different boxes represent neurons at different layers. A neuron connection mode and activation function used at each layer determine an expression function of the neural network.

2. Convolutional neural network (CNN): The CNN is a multi-layer neural network. Each layer includes a plurality of two-dimensional planes, and each plane includes a plurality of independent neurons. A plurality of neurons of each plane share a weight, and a quantity of parameters in the neural network may be reduced through weight sharing. Currently, in the convolutional neural network, a convolution operation performed by a processor is usually as follows: converting convolution of an input signal feature and a weight into a matrix multiplication operation between a signal matrix and a weight matrix. During a specific matrix multiplication operation, the signal matrix and the weight matrix are partitioned to obtain a plurality of fractional (fractional) signal matrices and fractal weight matrices, and then matrix multiplication and accumulation operations are performed on the plurality of fractal signal matrices and fractal weight matrices.

FIG. 4 is a schematic diagram of a hidden layer in a CNN. A black box in the figure represents a channel of each layer, or referred to as a feature map. Different channels may correspond to a same convolution kernel or different convolution kernels. For the CNN, not all upper-layer and lower-layer neurons can be directly connected, but the "convolution kernel" is used as a medium. In the network, an original location relationship may still be retained after a convolution operation is performed on to-be-processed information. As shown in the figure, after the convolution operation is performed on information at an (m-1)^{th} layer on the left, an m^{th} layer on the right is obtained.

It should be understood that FIG. 4 is merely an example for ease of understanding. For more detailed descriptions of the CNN, refer to a conventional technology. For brevity, details are not described herein.

3. Recurrent neural network (RNN): The RNN is an artificial neural network that has a hierarchical tree structure and whose network nodes perform recursion on input information in a sequence of the network nodes. In the RNN, output of a neuron may directly apply to the neuron at a next moment. To be specific, input of a neuron at an i^{th} layer at a moment m includes output of a neuron at an (i-1)^{th} layer at the moment, and further includes output of the neuron at a moment (m-1).

FIG. 5 is a schematic diagram of an RNN. Each black circle in the figure represents a neuron. It can be learned that, in addition to output of a neuron at a hidden layer 1 at a moment (shown by a straight line structure in the figure), input of a neuron at a hidden layer 2 further includes output of the neuron at a previous moment (shown by a semicircular arrow in the figure).

It should be understood that FIG. 5 is merely an example for ease of understanding. For more detailed descriptions of the RNN, refer to a conventional technology. For brevity, details are not described herein.

4. Performance determining criterion: In embodiments of this application, to obtain a target neural network having good performance, a pre-constructed target neural network may be evaluated by using the performance determining criterion.

In a possible design, the performance determining criterion may include a performance indicator and an output condition. The evaluation on the target neural network may be: For example, a standardized performance measurement function may be used to obtain a performance measurement value, and the performance measurement value is input into the performance determining criterion and is compared with one or more performance indicators, to determine whether the performance measurement value satisfies the output condition.

By way of example, and not limitation, the performance measurement function may include but is not limited to one or more of the following: a mean square error (mean square error, MSE), a normalized mean square error (normalized mean square error, NMSE), a mean absolute error (mean absolute error, MAE), a maximum absolute error (also referred to as an absolute error bound), a correlation coefficient, a cross entropy, mutual information, a bit error rate, or a code error rate.

The MSE, the NMSE, the MAE, the maximum absolute error, the bit error rate, the code error rate, and the like may be used to represent a degree of difference. The correlation coefficient, the cross entropy, the mutual information, and the like may be used to represent a degree of similarity. However, a person skilled in the art may understand that, when a degree of difference between two values is high, a degree of similarity between the two values is low; or when a degree of difference between two values is low, a degree of similarity between the two values is high. Therefore, the degree of similarity corresponds to the degree of difference.

The performance indicator may include one or more upper bounds of one or more performance indicators and/or one or more lower bounds of one or more performance indicators. The performance indicator may be represented, for example, by using one or more of the plurality of performance measurement functions that are listed above. Different performance indicators can be defined for different performance measurement functions.

For example, corresponding to a performance measurement function used to represent a degree of similarity, a higher a degree of similarity indicates better performance. Using the correlation coefficient as an example, an upper bound of a performance indicator may be defined as 0.99999, and a lower bound of the performance indicator may be defined as 0.9.

For another example, corresponding to a performance measurement function used to represent a degree of difference, a smaller degree of difference indicates better performance. Using the MSE as an example, an upper bound of a performance indicator may be defined as 0.001, and a lower bound of the performance indicator may be defined as 0.1.

It should be understood that the performance indicator is an indicator specified for determining whether the target neural network satisfies the output condition; in other words, an acceptable range of performance that can be reached after the target neural network reaching the performance indicator is used in a transmitter or a receiver. For example, using a system throughput as an example, if a correlation coefficient is less than 0.9, it may be considered that performance is very poor; if a correlation coefficient is greater than or equal to 0.9, it may be considered that performance is acceptable; or if a correlation coefficient is greater than 0.99999, it may be considered that performance has no greater gain, or has a very small gain. Therefore, an acceptable range of the correlation coefficient is [0.9, 0.99999]. Therefore, for the correlation coefficient, reaching a lower bound of a performance indicator may mean that the correlation coefficient is greater than or equal to 0.9, and not exceeding an upper bound of the performance indicator may mean that the correlation coefficient is less than or equal to 0.99999.

For another example, using a code error rate as an example, if an MSE is greater than 0.1, it may be considered that performance is very poor; if an MSE is less than or equal to 0.1, it may be considered that performance is acceptable; or if an MSE is less than 0.001, it may be considered that performance has no greater gain. Therefore, an acceptable range of the MSE may be [0.001, 0.1]. Therefore, for the MSE, reaching a lower bound of a performance indicator may mean that the MSE is less than or equal to 0.1, and not exceeding an upper bound of the performance indicator may mean that the MSE is greater than or equal to 0.001.

It can be learned from the foregoing examples that in embodiments of this application, if the performance measurement function is used to represent a degree of similarity, a higher performance measurement value output by the performance measurement function indicates a higher degree of similarity and better performance of the target neural network. Therefore, a lower bound of a performance indicator is less than an upper bound thereof. If the performance measurement function is used to represent a degree of difference, a lower performance measurement value output by the performance measurement function indicates a smaller degree of difference, and indicates better performance of the target neural network. Therefore, an upper bound of a performance indicator is less than a lower bound of the performance indicator. In other words, an upper bound and a lower bound of a performance indicator are defined based on good and poor performance. Therefore, for different performance indicators, a value relationship between an upper bound or a lower bound and a specific value is not constant.

In addition, in embodiments of this application, related descriptions of "reaching a lower bound of a performance indicator" may mean that a degree of similarity is greater than or equal to a threshold (for ease of differentiation and description, for example, denoted as a first threshold), or may mean that a degree of difference is less than or equal to a threshold (for ease of differentiation and description, for example, denoted as a second threshold); and related descriptions of "not exceeding an upper bound of the performance indicator" may mean that the degree of similarity is less than or equal to a threshold (for ease of differentiation and description, for example, denoted as a third threshold), or may mean that the degree of difference is greater than or equal to a threshold (for ease of differentiation and description, for example, denoted as a fourth threshold). For the degree of similarity, the corresponding first threshold is less than the third threshold; and for the degree of difference, the corresponding second threshold is greater than the fourth threshold.

When the performance determining criterion is used to determine whether a target neural network satisfies an output condition, determining may be performed based on one or more performance indicators. The one or more performance indicators may include, for example, one or more performance indicators given for one performance measurement function, for example, include an upper bound and/or a lower bound of the performance indicator. The one or more performance indicators may alternatively include one or more performance indicators given for each of a plurality of different performance measurement functions. This is not limited in this application.

For example, whether the target neural network satisfies the output condition is determined based on a correlation coefficient. In a protocol, an upper bound and a lower bound of the correlation coefficient may be defined, and the output condition may be defined as follows: Each performance measurement value reaches a lower bound of a performance indicator, and does not exceed an upper bound of the performance indicator. As shown in the foregoing example, the lower bound is 0.9, and the upper bound is 0.99999. A result output by the target neural network and a reference neural network is input into the performance measurement function, and one or more performance measurement values may be obtained. The one or more performance measurement values are separately compared with the upper bound and the lower bound to determine whether the one or more performance measurement values all fall within a range of [0.9, 0.99999]. If yes, the output condition is satisfied. If not, the output condition is not satisfied.

For another example, whether the target neural network satisfies the output condition is still determined based on a correlation coefficient. In a protocol, an upper bound and a lower bound of the correlation coefficient may be defined, and the output condition may be defined as follows: Each performance measurement value reaches a lower bound of a performance indicator, and 90% of performance measurement values do not exceed an upper bound of the performance indicator. As shown in the foregoing example, the lower bound is 0.9, and the upper bound is 0.99999. One or more performance measurement values output by the performance measurement function may be separately compared with the upper bound and the lower bound to determine whether the one or more performance measurement values reach the lower bound 0.9 and whether more than 90% of the performance measurement values do not exceed the upper bound 0.99999. If yes, the output condition is satisfied. If not, the output condition is not satisfied.

For still another example, whether the target neural network satisfies the output condition is determined based on a correlation coefficient and a code error rate. In a protocol, that an upper bound of a performance indicator includes an upper bound and a lower bound of the correlation coefficient, and a lower bound of the code error rate is defined, and the output condition may be defined as follows: A performance measurement value reaches the lower bound of the correlation coefficient and the lower bound of the code error rate, and does not exceed the upper bound of the correlation coefficient. As shown in the foregoing example, the lower bound of the correlation coefficient is 0.9, the upper bound of the correlation coefficient is 0.99999, and the lower bound of the code error rate is 0.1. One or more performance measurement values that represent the correlation coefficient and that are output by the performance measurement function may be separately compared with the upper bound and the lower bound of the correlation coefficient to determine whether the one or more performance measurement values reach the lower bound 0.9 and do not exceed the upper bound 0.99999, and whether one or more performance measurement values that represent the code error rate and that are output by the performance measurement function reach the lower bound.

In addition, the performance determining criterion may further include an upper bound and/or a lower bound of a performance indicator, and an output condition that are specified for different service priorities.

For example, for a service such as a voice call or a video call, a corresponding performance indicator may be high, or an output condition is strict; and for a service such as a short message service, a corresponding performance indicator may be low, or an output condition is loose.

For example, compared with that a lower bound of a correlation coefficient is 0.8, a performance indicator when the lower bound of the correlation coefficient is 0.9 is high. For another example, compared with that a lower bound of an MSE is 0.1, a performance indicator when the lower bound of the MSE is 0.01 is high. For still another example, compared with that an output condition is that some performance measurement values reach a lower bound of a performance indicator, that the output condition is that all performance measurement values reach the lower bound of the performance indicator is strict.

When a target neural network is evaluated, the target neural network may be evaluated by using a corresponding performance indicator and an output condition based on a priority of an applied service.

It should be understood that the performance determining criterion is described in detail above with reference to examples of a plurality of performance indicators and output conditions. However, it should be understood that the examples are shown merely for ease of understanding, and shall not constitute any limitation on this application.

5. A dual network (or referred to as a dual architecture): The dual network is used to describe a neural network structure jointly optimized by a transmitting end and a receiving end (for example, a base station side and a terminal side) in a communication network. The dual network may specifically include a transmitting-end neural network and a receiving-end neural network. The dual network includes but is not limited to a receiving-end neural network and a transmitting-end neural network that are jointly constructed based on an autoencoder (Autoencoder) structure or various variation forms of the autoencoder structure, or another neural network structure combination. In the autoencoder structure, the transmitting-end neural network is an encoder neural network (encoder neural network), and the receiving-end neural network is a decoder neural network (decoder neural network). They restrict each other and work cooperatively.

It should be noted that an encoder and a decoder described herein are different from an encoder and a decoder described above for channel encoding and decoding.

In embodiments of this application, the transmitting-end neural network and the receiving-end neural network may be a one-to-one, one-to-many, or many-to-one combination, to adapt to a plurality of system performance and implementation complexity requirements. A pair of neural networks coupled to each other is a transmitting-end neural network and a receiving-end neural network that can work cooperatively.

The following describes in detail the neural network obtaining method provided in embodiments of this application with reference to the accompanying drawings. It should be understood that the method may include a process of obtaining a transmitting-end neural network used in a transmitter and a process of obtaining a receiving-end neural network used in a receiver. The following describes procedures of obtaining a transmitting-end neural network and a receiving-end neural network with reference to different embodiments. For ease of differentiation and description, a to-be-obtained neural network is referred to as a target neural network below. A target neural network used in a transmitter is referred to as a transmitting-end target neural network, and a target neural network used in a receiver is referred to as a receiving-end target neural network.

It should be further understood that, for example, obtaining the transmitting-end target neural network and the receiving-end target neural network may be completed offline (offline). For example, the transmitting-end target neural network and the receiving-end target neural network may be obtained from a same device, or may be obtained from different devices. This is not limited in this application. A device configured to obtain the target neural network may be, for example, a communication device, or may be a computing device different from the communication device. This is not limited in this application. For ease of description below, a device configured to obtain a target neural network is referred to as an obtaining device.

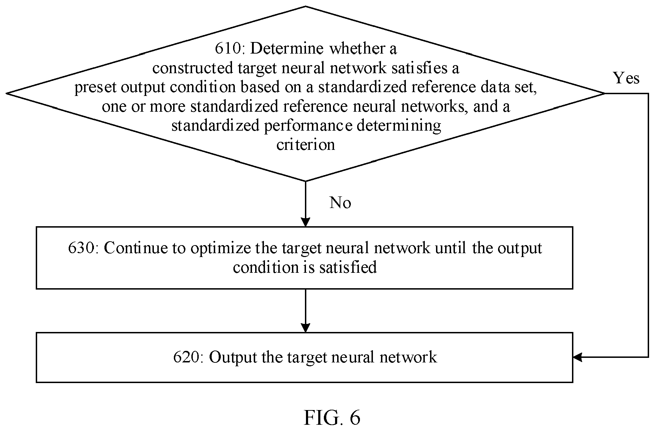

FIG. 6 is a schematic flowchart of a neural network obtaining method 600 according to an embodiment of this application. As shown in FIG. 6, the method 600 includes step 610 to step 630. The following describes the steps in the method 600 in detail.

In step 610, whether a constructed target neural network satisfies a preset output condition is determined based on a standardized reference data set, one or more standardized reference neural networks, and a standardized performance determining criterion.

The target neural network may be a dedicated neural network of an application. The target neural network may be used in each signal processing phase in a communication system, for example, coding and decoding, constellation modulation and demodulation, precoding and detection reception, channel information extraction and compression, and channel information reconstruction. Specifically, a transmitting-end neural network may be used for encoding, and a receiving-end neural network may be used for decoding. The transmitting-end neural network may be used for constellation modulation, and the receiving-end neural network may be used for demodulation. The transmitting-end neural network may be used for precoding, and the receiving-end neural network may be used for detection reception. The transmitting-end neural network may be used for channel information extraction and compression, and the receiving-end neural network may be used for channel information reconstruction.

It should be understood that the target neural network obtained according to the method provided in this embodiment of this application may be further used for another function. This is not limited in this application.

The target neural network may be constructed on an existing neural network structure. For example, a design is extended on a basic network structure such as a CNN or an RNN. Alternatively, a new network structure design may be used. The target neural network may be obtained by training the new network structure design based on the standardized reference data set and/or another data set related to a target application.

Related descriptions of the neural network structure have been described in detail above with reference to FIG. 3 to FIG. 5. For brevity, details are not described herein again.

To enable output of the neural network to be as close as possible to a value that really needs to be predicted, an obtaining device may train the target neural network. For example, a weight vector of each layer of the neural network may be updated based on a difference between a predicted value of a current network and an actually desired target value. For example, if the predicted value of the network is high, the weight vector may be adjusted to make the predicted value lower. Through continuous adjustment, the neural network can predict the desired target value. Therefore, "how to compare the difference between the predicted value and the target value" needs to be predefined, to be specific, a loss function (loss function), a cost function (cost function), or an objective function (objective function) are important equations used to measure the difference between the predicted value and the target value. The loss function is used as an example. A higher output value (loss) of the loss function indicates a larger difference. Therefore, training of the neural network becomes a process of reducing the output value as much as possible.

The training of the target neural network may be implemented based on the standardized reference data set and/or another data set related to the application.

For example, the standardized reference data set may specifically include a reference data set used to train the target neural network and a reference data set used to evaluate performance of the target neural network. Standardization may refer to a protocol definition. Each vendor may construct a target neural network based on the foregoing method, and evaluate the target neural network based on the standardized reference data set.

Because the foregoing target neural network is a neural network used in a transmitter or a receiver, to obtain better performance in the communication system, the target neural network may be evaluated based on the standardized reference data set, the standardized reference neural network, and the standardized performance determining criterion, to determine whether the target neural network satisfies the output condition.

The reference data set, the reference neural network, and the performance determining criterion may all be standardized, or predefined in a protocol. A plurality of sets of different standardized configurations may be predefined in a protocol for different application scenarios. When the target neural network is evaluated based on different application scenarios, a set of standardized configurations that matches the application scenario may be used for evaluation. Specifically, in different application scenarios, the target neural network may be evaluated by using a matching reference data set, reference neural network, performance measurement function, and performance determining criterion, to obtain target neural networks used in the different scenarios.

The application scenarios described herein may be specifically scenarios distinguished based on different air interface transmission conditions. For example, the foregoing application scenarios may include but are not limited to different channel scenarios such as an outdoor dense urban area, an outdoor common urban area, an outdoor rural area, an outdoor mountainous area, an indoor office, and an indoor factory; a single interference source, a plurality of interference sources, and a plurality of interference signal types with different strengths; different signal-to-noise ratio conditions of a high signal-to-noise ratio at a medium or near point and a low signal-to-noise ratio at a far point; and different moving conditions such as a low walking speed, a medium urban vehicle-mounted speed, and an ultra-high railway speed. Air interface transmission conditions vary in different application scenarios, and different application scenarios have different requirements on transmission reliability. A standardized configuration that matches an application scenario may include one or more of the following: a standardized reference data set, a standardized reference neural network, a standardized data structure, a standardized performance measurement function, a standardized performance determining criterion, and the like.

The reference neural network may include a receiving-end reference neural network and/or a transmitting-end reference neural network. In addition, when the reference neural network includes the receiving-end reference neural network and the transmitting-end reference neural network, the receiving-end reference neural network and the transmitting-end reference neural network are one-to-one coupled.

The data structure may be used to generate and/or parse air interface information. More specifically, the data structure may be used by the transmitting-end neural network to generate the air interface information, or may be used by the receiving-end neural network to parse the air interface information. The data structure may also be understood as a generation rule of the air interface information or an interpretation rule of the air interface information.

It should be understood that the data structure is a broader generalization, and may be used to guide data processing in different data processing phases.

The foregoing channel information compression and extraction and channel information reconstruction are used as examples. The transmitting end may perform pre-processing on input original data based on a data structure (for example, denoted as a data structure 1), for example, re-arrange the input original data; extract information from re-arranged data based on another data structure (for example, denoted as a data structure 2), for example, determine a tensor expression to be used; and generate air interface information based on still another data structure (for example, denoted as a data structure 3), for example, determine how to perform quantization and bit mapping. The receiving end may parse the air interface information based on a data structure corresponding to the data structure 1, process parsed data based on a data structure corresponding to the data structure 2, and further obtain the original data based on a data structure corresponding to the data structure 3.

Specific content of the data structure is not limited in this application.

A standardized implementable capability measurement value may be understood as a capability parameter required when the neural network is used to implement an application, and may be used to select a matching neural network and/or a matching performance indicator. The matching neural network herein may specifically mean that the neural network can be used in the transmitter or the receiver under a given constraint, and the given constraint may include implementation complexity and/or air interface overheads. The matching performance indicator may be specifically a performance indicator used to evaluate the neural network in a phase of obtaining the neural network.

For example, the implementable capability measurement value may include but is not limited to one or more of the following: air interface information overheads, an amount of computation required for implementing the neural network, a quantity of parameters stored for implementing the neural network, and computation precision required for implementing the neural network.

For example, the air interface information overheads may be, for example, bit overheads; the amount of computation required for implementing the neural network may be, for example, floating-point operations per second (floating-point operations per second, FLOPS); and the computation precision required for implementing the neural network may be, for example, a 2-bit fixed-point, a 4-bit fixed-point, an 8-bit fixed-point, a 16-bit fixed-point, a 16-bit floating point, a 32-bit floating point, or a 64-bit floating point. This is not limited in this application.

Each neural network may represent a capability of the neural network by using a corresponding parameter listed above. Because implementation complexity of different applications may be different, requirements on a neural network capability are also different. The obtaining device may select a matching neural network based on a support capability of a current application for implementation complexity.

It should be noted that, based on implementable capability measurement values of different neural networks, upper limits and/or lower limits of performance that can be achieved by the different neural networks may be different. Therefore, a same performance indicator may have one or more performance indicator thresholds (for example, including an upper bound and/or a lower bound) that correspond to one or more different capabilities. When the neural network is subsequently evaluated, a corresponding performance indicator may be selected for evaluation based on a selected implementable capability measurement value.

It should be understood that standardized configurations matching different application scenarios may be different from each other, or may be partially the same. For example, in standardized configurations matching different application scenarios, a same reference data set may be shared, or a same data structure may be shared. This is not limited in this application.

The following describes in detail a process of evaluating the target neural network with reference to specific implementations.

In an implementation, each vendor may cascade the constructed target neural network with the one or more standardized reference neural networks based on the standardized reference data set, evaluate an output result obtained after the cascading, and determine, based on the standardized performance determining criterion, whether the target neural network satisfies the output condition. If the output condition is satisfied, step 620 may be performed to output the target neural network. If the output condition is not satisfied, step 630 may be performed to optimize the target neural network until an obtained target neural network satisfying the output condition is output.

In another implementation, each vendor may input one or more pieces of data obtained from the standardized reference data set into the constructed target neural network and the one or more standardized reference neural networks, compare a result output by the target neural network with a result output by the reference neural network, and determine, based on the standardized performance determining criterion, whether the target neural network satisfies the output condition. If the output condition is satisfied, step 620 may be performed to output the target neural network. If the output condition is not satisfied, step 630 may be performed to optimize the target neural network until an obtained target neural network satisfying the output condition is output.

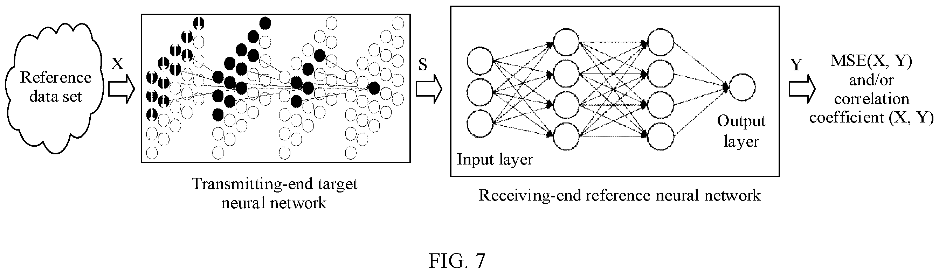

The following describes the foregoing two implementations in more detail with reference to specific examples in FIG. 7 to FIG. 14. In other words, a plurality of examples shown below are more detailed descriptions of step 610. For ease of understanding and description, unless otherwise specified in the following descriptions, a transmitting-end neural network may include a pre-processing module, an information extraction module, and a post-processing module; and a receiving-end neural network may include an inverse post-processing module, an inverse information processing module, and an inverse pre-processing module.

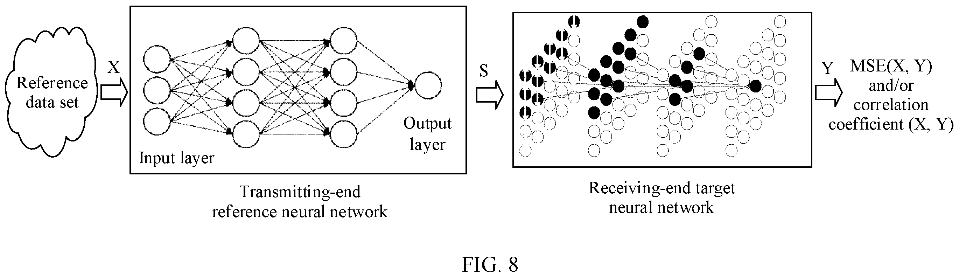

FIG. 7 and FIG. 8 each are a schematic diagram of a neural network obtaining method according to an embodiment of this application. The neural network obtaining methods shown in FIG. 7 and FIG. 8 are examples in which a target neural network is cascaded with a standardized reference neural network, and an output result obtained after the cascading is evaluated. The target neural network shown in FIG. 7 may be used in a transmitter, and the target neural network is a transmitting-end reference neural network. The reference neural network may be used in a receiver, and the reference neural network is a receiving-end reference neural network. The target neural network shown in FIG. 8 may be used in a receiver, and the target neural network is a receiving-end target neural network. The reference neural network may be used in a transmitter, and the reference neural network is a transmitting-end reference neural network.

As shown in FIG. 7, an obtaining device may obtain one or more pieces of transmitting-end data from a reference data set. For example, one piece of transmitting-end data is denoted as **X,** and **X** is input into the transmitting-end target neural network. After performing pre-processing and information extraction on the transmitting-end data **X,** the transmitting-end target neural network may obtain compressed data **X'** . The transmitting-end target neural network may further process the compressed data **X'** based on a standardized data structure, to generate air interface information **S.** Then, the air interface information **S** may be input into the receiving-end reference neural network. After parsing the air interface information **S** based on the standardized data structure, the receiving-end reference neural network may restore compressed data **X̃'**. The receiving-end reference neural network may further obtain an output result **Y** based on the compressed data **X̃'**.

As described above, the transmitting-end target neural network may be used in different signal processing phases. Channel information extraction and compression and channel information reconstruction are used as examples. The transmitting-end data **X** may be, for example, a channel **H.** The transmitting-end neural network may sequentially perform pre-processing, information extraction, and post-processing on the channel **H** based on the transmitting-end neural network operation procedure listed in FIG. 2, to generate the air interface information **S.**

The receiving-end reference neural network may reconstruct the channel **H** based on the received air interface information **S.** The receiving-end reference neural network may sequentially perform inverse post-processing, inverse information extraction, and inverse pre-processing on the air interface information S based on the receiving-end neural network operation procedure listed in FIG. 2, to restore a channel **H̃**. **H̃** output by the receiving-end reference neural network is an estimated value **H̃** of the channel **H**. It should be understood that the estimated value is an output result.

Thereafter, the obtaining device may input the output result **Y** and the input transmitting-end data **X** into a performance measurement function to obtain a performance measurement value. It should be understood that the obtaining device may input the output result **Y** and the transmitting-end data **X** into one or more performance measurement functions, to obtain one or more performance measurement values.

It should be further understood that the obtaining device may further process, based on the foregoing procedure, the one or more pieces of transmitting-end data obtained from the reference data set, and may obtain a plurality of pairs of output results and transmitting-end data. Each of the plurality of pairs of output results and transmitting-end data may be input into one or more performance measurement functions to obtain one or more performance measurement values. The plurality of pairs of output results and transmitting-end data can be used to obtain a plurality of performance measurement values.

The obtaining device may further compare the output performance measurement value with a standardized performance indicator according to a standardized performance determining criterion, and then determine, based on a comparison result, whether the transmitting-end target neural network satisfies a preset output condition.

For example, the output condition may be that each performance measurement value reaches a lower bound of the performance indicator. The performance measurement function is, for example, an MSE, and the lower bound of the performance indicator may be, for example, a lower bound of the MSE. One or more pairs of output results and transmitting-end data are input into the performance measurement function to obtain one or more MSE values. For example, the output result **H̃** and the transmitting-end data **H** are input into the performance measurement function to obtain an MSE of **H̃** and **H,** that is, MSE(**H**, **H̃**). Obtaining and merging may further determine whether the obtained one or more performance measurement values reach the lower bound of the standardized MSE. If all of the one or more performance measurement values reach the lower bound of the standardized MSE, the output condition is satisfied. If a part or all of the one or more performance measurement values do not reach the lower bound of the standardized MSE, the output condition is not satisfied.

It should be understood that, if the receiving-end reference neural network is a matchable neural network selected based on an implementable capability measurement value, the foregoing performance indicator may be evaluated based on a performance indicator corresponding to the implementable capability measurement value.

It should be further understood that, as described above, based on different designs of modules included in the neural network, input and output of the transmitting-end neural network and input and output of the receiving-end neural network are not necessarily the same as those in the foregoing example. For example, input of the transmitting-end neural network may be the channel **H,** and output of the receiving-end neural network may be an eigenvector (it should be understood that the eigenvector may be understood as an example of the channel feature information **V** described above). Herein, the eigenvector output by the receiving end is a restored eigenvector, for example, denoted as **Ũ**. However, this does not affect use of the performance determining criterion. Due to a relationship between the eigenvector and the channel, **U**=eig(**H**) (where eig() represents a function used to solve the eigenvector), and the channel **H̃** may be further restored based on the eigenvector **Ũ**, or the eigenvector **U** may be further determined based on the channel **H,** so as to determine an MSE of **U** and **Ũ**. That is, MSE(**H**, **H̃**) may also be represented as MSE(**U**, **Ũ**). In other words, MSE(**H**, **H̃**) and MSE(**U**, **Ũ**) are interchangeable. The following describes the performance measurement function in a plurality of places. For brevity, descriptions of same or similar cases are omitted below.

For another example, the output condition may be that 90% of performance measurement values reach a lower bound of the performance indicator. The performance measurement function is, for example, a calculation function of a correlation coefficient, and the lower bound of the performance indicator is, for example, a lower bound of the correlation coefficient. One or more pairs of output results and transmitting-end data are input into the performance measurement function to obtain one or more correlation coefficients. For example, a correlation coefficient between the output result **H̃** and the transmitting-end data **H** may be represented as Corr(**H**, **H̃**) or Corr(**U**, **Ũ**). Corr() represents a function for calculating a correlation coefficient. The obtaining device may further determine whether the obtained one or more performance measurement values reach the lower bound of the standardized correlation coefficient. If more than 90% of the performance measurement values reach the lower bound of the correlation coefficient, the output condition is satisfied. If less than 90% of the performance measurement values reach the lower bound of the correlation coefficient, the output condition is not satisfied.

It should be understood that the MSE and the correlation coefficient are merely examples. The performance indicator and the related performance measurement function thereof used by the obtaining device to determine whether the target neural network satisfies the output condition are not limited in this application. It should be further understood that reaching the lower bound of the performance indicator may be used as an example of the output condition of the target neural network, but shall not constitute any limitation on this application.

Because the performance determining criterion has been described in detail above with reference to a plurality of examples, for brevity, more output conditions are not listed herein, and different output conditions are also not described in detail by using examples one by one.

As shown in FIG. 8, an obtaining device may obtain one or more pieces of transmitting-end data from a reference data set. For example, one piece of transmitting-end data is denoted as **X,** and **X** is input into the transmitting-end reference neural network. After performing pre-processing and information extraction on the transmitting-end data **X,** the transmitting-end reference neural network may obtain compressed data **X'** . The transmitting-end reference neural network may further process the compressed data **X'** based on a standardized data structure, to generate air interface information **S.** Then, the air interface information S may be input into the receiving-end target neural network. After parsing the air interface information **S** based on the standardized data structure, the receiving-end target neural network may restore compressed data **X̃'**. The receiving-end target neural network may further obtain an output result **Y** based on the compressed data **X̃'**.

Channel information extraction and compression and channel information reconstruction are still used as examples. The transmitting-end data **X** may be a channel **H.** The transmitting-end reference neural network may sequentially perform pre-processing, information extraction, and post-processing on the channel **H** based on the transmitting-end neural network operation procedure listed in FIG. 2, to generate the air interface information **S.**

The receiving-end target neural network may reconstruct the channel **H** based on the received air interface information **S.** The receiving-end target neural network may sequentially perform inverse post-processing, inverse information extraction, and inverse pre-processing on the air interface information based on the receiving-end neural network operation procedure listed in FIG. 2, to restore a channel **H̃. H̃** output by the receiving-end target neural network is an estimated value **H̃** of the channel **H**. It should be understood that the estimated value is also an output value.

Thereafter, the obtaining device may input the output result **Y** and the input transmitting-end data **X** into a performance measurement function to obtain a performance measurement value. It should be understood that the obtaining device may input the output result **Y** and the transmitting-end data **X** into one or more performance measurement functions, to obtain one or more performance measurement values.

It should be further understood that the obtaining device may further process, based on the foregoing procedure, the one or more pieces of transmitting-end data obtained from the reference data set, and may obtain a plurality of pairs of output results and transmitting-end data. Each of the plurality of pairs of output results and transmitting-end data may be input into one or more performance measurement functions to obtain one or more performance measurement values. The plurality of pairs of output results and transmitting-end data can be used to obtain a plurality of performance measurement values.

The obtaining device may further compare the output performance measurement value with a standardized performance indicator according to a standardized performance determining criterion, and then determine, based on a comparison result, whether the transmitting-end target neural network satisfies a preset output condition.

Because the performance determining criterion has been described in detail above with reference to a plurality of examples, for brevity, more output conditions are not listed herein, and different output conditions are also not described in detail by using examples one by one.

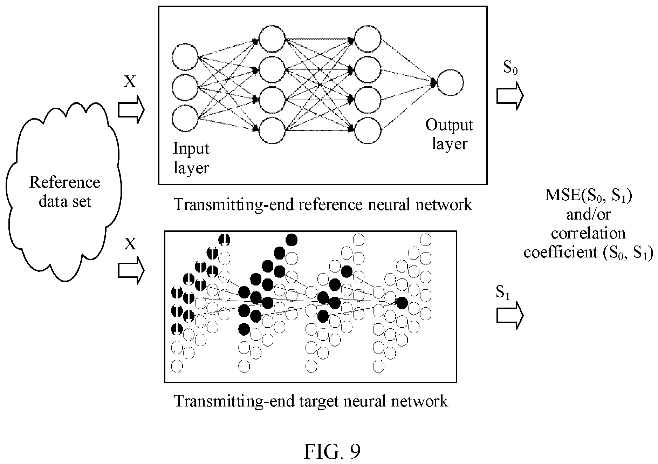

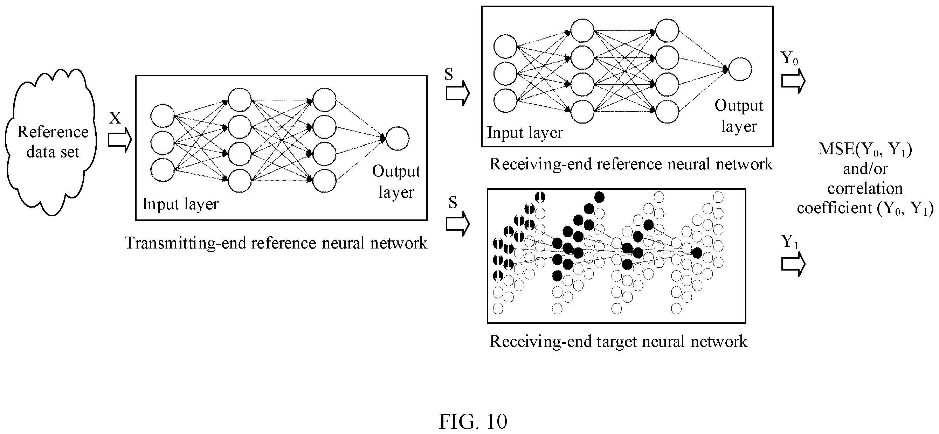

FIG. 9 and FIG. 10 each are a schematic diagram of a neural network obtaining method according to an embodiment of this application. The neural network obtaining methods shown in FIG. 9 and FIG. 10 are examples in which a standardized reference neural network is used as a reference to evaluate a target neural network obtained through training. A target neural network and a reference neural network shown in FIG. 9 may be used in a transmitter. The target neural network is a transmitting-end target neural network, and the reference neural network is a transmitting-end reference neural network. A target neural network and a reference neural network shown in FIG. 10 may be used in a receiver. The target neural network is a receiving-end target neural network, and the reference neural network is a receiving-end reference neural network.

As shown in FIG. 9, an obtaining device may obtain one or more pieces of transmitting-end data from a reference data set. Each piece of transmitting-end data may be input into the transmitting-end target neural network and the transmitting-end reference neural network, to obtain target air interface information output from the transmitting-end target neural network and reference air interface information generated from the transmitting-end reference neural network.

One piece of transmitting-end data **X** is used as an example. The transmitting-end data **X** is input into the transmitting-end target neural network and the transmitting-end reference neural network. The transmitting-end reference neural network may perform pre-processing and information extraction on the transmitting-end data **X** based on a pre-designed algorithm, to obtain compressed data **X**₀'. The transmitting-end reference neural network may process the compressed data **X**₀' based on a standardized data structure, to obtain reference air interface information **S**₀ generated by the transmitting-end reference neural network. The transmitting-end target neural network may perform pre-processing and information extraction on the transmitting-end data **X** based on an algorithm corresponding to a receiving-end neural network, to obtain compressed data **X**₁'. The transmitting-end target neural network may process the compressed data **X₁'** based on the standardized data structure, to obtain target air interface information **S**₁ generated by the transmitting-end target neural network.

A pre-processing module configured to pre-process the transmitting-end data **X** may be a module shared by the transmitting-end reference neural network and the transmitting-end target neural network, that is, the processes of pre-processing the transmitting-end data **X** are performed by a same pre-processing module. Alternatively, pre-processing modules configured to pre-process the transmitting-end data **X** may be modules separately included in the transmitting-end reference neural network and the transmitting-end target neural network, that is, the processes of pre-processing the transmitting-end data **X** are respectively performed by the transmitting-end reference neural network and the transmitting-end target neural network.

Certainly, the pre-processing module may alternatively not be included in the transmitting-end reference neural network and the transmitting-end target neural network, and exists independently in the transmitter as the pre-processing module. The pre-processing module may separately input pre-processed data to the transmitting-end reference neural network and the transmitting-end target neural network. In this case, the transmitting-end data **X** is input into the transmitting-end target neural network and the transmitting-end reference neural network after being processed by the pre-processing module.

Channel information extraction and compression and channel information reconstruction are still used as examples. The transmitting-end data **X** may be a channel **H.** In an implementation, the channel **H** may be separately input into the transmitting-end reference neural network and the transmitting-end target neural network. The transmitting-end reference neural network and the transmitting-end target neural network may separately perform pre-processing, information extraction, and post-processing on the channel **H** in sequence based on the transmitting-end neural network operation procedure shown in FIG. 2, to respectively obtain the reference air interface information **S**₀ and the target air interface information **S**₁.

Then, the obtaining device may input the reference air interface information **S**₀ and the target air interface information **S**₁ into a performance measurement function to obtain a performance measurement value. It should be understood that the obtaining device may input the reference air interface information **S**₀ and the target air interface information **S**₁ into one or more performance measurement functions, to obtain one or more performance measurement values.

It should be further understood that the obtaining device may further process, based on the foregoing procedure, the one or more pieces of transmitting-end data obtained from the reference data set, and may obtain a plurality of pairs of reference air interface information and target air interface information. A pair of reference air interface information and target air interface information obtained from same transmitting-end data may be input into one or more performance measurement functions to obtain one or more performance measurement values. A plurality of performance measurement values may be obtained by using a plurality of pairs of reference air interface information and target air interface information.

The obtaining device may further compare the output performance measurement value with a standardized performance indicator according to a standardized performance determining criterion, and then determine, based on a comparison result, whether the transmitting-end target neural network satisfies a preset output condition.

Because the performance determining criterion has been described in detail above with reference to a plurality of examples, for brevity, more output conditions are not listed herein, and different output conditions are also not described in detail by using examples one by one.

As shown in FIG. 10, an obtaining device may input one or more pieces of air interface information into the receiving-end reference neural network and the receiving-end target neural network. The one or more pieces of air interface information may be directly obtained from a reference data set, or may be air interface information obtained from a transmitter after transmitting-end data obtained from the reference data set is input into the transmitter. This is not limited in this application, provided that air interface information input into the receiving-end reference neural network and the receiving-end target neural network each time is same air interface information.

In a possible design, the air interface information input into the receiving-end reference neural network and the receiving-end target neural network may be obtained in the following manner: The transmitting-end data obtained from the reference data set is input into a transmitting-end reference neural network, and the transmitting-end reference neural network may process the input transmitting-end data based on a predefined data structure, to obtain air interface information to be sent to the receiving-end target neural network and the receiving-end reference neural network.

The air interface information output by the transmitting-end reference neural network may be input into the receiving-end reference neural network coupled to the transmitting-end reference neural network. In other words, in this embodiment, a receiving-end target neural network may be evaluated by using a pair of a transmitting-end reference neural network and a receiving-end reference neural network that are coupled to each other.

One piece of air interface information **S** is used as an example. The air interface information **S** may be input into the receiving-end target neural network and the receiving-end reference neural network. The receiving-end reference neural network may parse the air interface information S based on a standardized data structure, and may further process a parsing result based on a pre-designed algorithm, to obtain a reference output result **Y**₀ output by the receiving-end reference neural network. The receiving-end target neural network may parse the air interface information **S** based on the standardized data structure, and may further process a parsing result based on an algorithm corresponding to the receiving-end reference neural network, to obtain a target output result **Y**₁ output by the receiving-end target neural network.

Channel information extraction and compression and channel information reconstruction are still used as examples. The air interface information **S** is input into the receiving-end target neural network and the receiving-end reference neural network. After receiving the air interface information **S**, the receiving-end reference neural network may sequentially perform inverse post-processing, inverse information extraction, and inverse pre-processing on the air interface information S based on the receiving-end neural network operation procedure listed in FIG. 2, to obtain an estimated value **H̃**₀ of a channel **H**. After receiving the air interface information **S**, the receiving-end target neural network may sequentially perform inverse post-processing, inverse information extraction, and inverse pre-processing on the air interface information S based on the receiving-end neural network operation procedure listed in FIG. 2, to obtain an estimated value **H̃**₁ of the channel **H.** It should be understood that the estimated value **H̃**₀ output by the reference neural network is also a reference output result. The estimated value **H̃**₁ output by the target neural network is also a target output result.

Then, the obtaining device may input the reference output result **H̃**₀ and the target output result **H̃**₁ into a performance measurement function, to obtain a performance measurement value. It should be understood that the obtaining device may input the reference output result **H̃**₀ and the target output result **H̃**₁ into one or more performance measurement functions, to obtain one or more performance measurement values.

It should be further understood that the obtaining device may process the one or more pieces of air interface information based on the foregoing procedure, to obtain a plurality of target output results output from the receiving-end target neural network and a plurality of reference output results output from the reference neural network. A pair of a target output result and a reference output result obtained based on same air interface information may be input into one or more performance measurement functions to obtain one or more performance measurement values. A plurality of performance measurement values may be obtained by using a plurality of pairs of target output results and reference output results.

The obtaining device may further compare the output performance measurement value with a standardized performance indicator according to a standardized performance determining criterion, and then determine, based on a comparison result, whether the transmitting-end target neural network satisfies a preset output condition.

Because the performance determining criterion has been described in detail above with reference to a plurality of examples, for brevity, more output conditions are not listed herein, and different output conditions are also not described in detail by using examples one by one.

With reference to FIG. 7 to FIG. 10, the foregoing mainly describes a specific process in which an obtaining device evaluates a target neural network with reference to a standardized transmitting-end reference neural network and/or receiving-end reference neural network. However, it should be understood that the foregoing listed examples should not constitute any limitation on this application.

For example, the obtaining device may alternatively evaluate a target neural network by using two different reference neural networks. The two reference neural networks may generate two different output results based on same input. The two output results may be output results of two reference neural networks designed based on obtaining different performance lower limits, or the two output results may be output results of two reference neural networks designed based on obtaining an upper limit and a lower limit of performance. Therefore, both the two output results may be used to determine whether the target neural network satisfies an output condition.

More specifically, if the two output results are output results of two different reference neural networks designed based on obtaining different performance lower limits, the two output results, separately with transmitting-end data, may be input into different performance measurement functions to obtain different performance measurement values, and the performance measurement value may be compared with a lower bound of a corresponding performance indicator. When both the two output results exceed the lower bound of the performance indicator, it is determined that the target neural network satisfies the output condition. Therefore, it can be ensured that performance of the target neural network is not lower than the lower limit when the target neural network is used.

If the two output results may be output results of two reference neural networks designed based on obtaining an upper limit and a lower limit of performance, in the two output results, the output result of the reference neural network designed based on obtaining the upper limit of the performance and transmitting-end data may be input into a performance measurement function, to obtain a performance measurement value. The performance measurement value may be compared with an upper bound of a performance indicator, so that performance of the target neural network does not exceed the upper limit when the target neural network is used. The output result of the reference neural network designed based on obtaining the lower limit of the performance and the transmitting-end data may be input into the performance measurement function, to obtain another performance measurement value. The performance measurement value may be compared with a lower bound of the performance indicator, so that it can be ensured that performance of the target neural network is not lower than the lower limit when the target neural network is used.

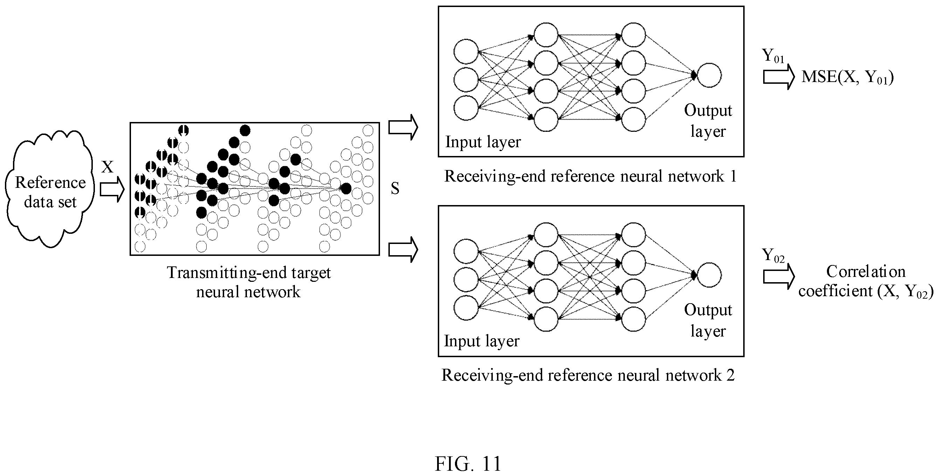

FIG. 11 to FIG. 14 below show specific processes in which an obtaining device evaluates a target neural network with reference to a plurality of standardized transmitting-end reference neural networks and/or receiving-end reference neural networks.

FIG. 11 shows a specific process in which an obtaining device determines, with reference to two standardized reference neural networks, whether a target neural network satisfies an output condition. In FIG. 11, the target neural network may be cascaded with the reference neural networks. The target neural network may be used in a transmitter, and is a transmitting-end target neural network. The reference neural networks may be used in a receiver, and are receiving-end reference neural networks.

One (for example, a receiving-end reference neural network 1 in the figure) of the two receiving-end reference neural networks shown in FIG. 11 may be a neural network designed based on obtaining a lower limit of specific performance (for example, an MSE), and the other (for example, a receiving-end reference neural network 2 in the figure) is a neural network designed based on obtaining a lower limit of other performance (for example, a correlation coefficient). Air interface information **S** output by the transmitting-end target neural network is separately input into the receiving-end reference neural network 1 and the receiving-end reference neural network 2. The receiving-end reference neural network 1 and the receiving-end reference neural network 2 may obtain output results based on the receiving-end neural network operation procedure listed in FIG. 2. For example, the receiving-end reference neural network 1 may obtain an output result **Y**₀₁, and the receiving-end reference neural network 2 may obtain an output result **Y**₀₂. Based on the foregoing method, the obtaining device may input the output results **Y**₀₁ and **Y**₀₂ generated by the receiving-end reference neural networks, separately with transmitting-end data **X** input into the transmitting-end target neural network, to a performance measurement function, to obtain a performance measurement value, and further determine, according to a performance determining criterion and the performance measurement value, whether the transmitting-end target neural network satisfies the output condition.

The performance measurement function shown in FIG. 11 includes an MSE and a correlation coefficient. In FIG. 11, a performance measurement value MSE(**X**, **Y**₀₁) may be obtained based on the transmitting-end data **X** and the output result **Y**₀₁, and a performance measurement value correlation coefficient (**X**, **Y**₀₂) may be obtained based on the transmitting-end data **X** and the output result **Y**₀₂. The obtaining device further determines, with reference to a lower bound of a standardized MSE and a lower bound of a standardized correlation coefficient, whether the transmitting-end target neural network satisfies the output condition.

Optionally, the output condition is that: The performance measurement value of the output result **Y**₀₁ generated by the receiving-end reference neural network 1 and the transmitting-end data reaches the lower bound of the MSE, and the performance measurement value of the output result **Y**₀₂ generated by the receiving-end reference neural network 2 and the transmitting-end data reaches the lower bound of the correlation coefficient. Because the two receiving-end reference neural networks that output the foregoing two output results are respectively obtained based on different performance lower limits, the obtained performance measurement values may be respectively compared with lower bounds of different performance indicators.

In this embodiment, if MSE(**X**, **Y**₀₁) reaches the lower bound of the performance indicator, and the correlation coefficient (**X**, **Y**₀₂) reaches the lower bound of the correlation coefficient, the transmitting-end target neural network satisfies the output condition.

If one of the foregoing conditions is not satisfied, the target neural network does not satisfy the output condition. For example, for an output condition 1, if MSE(**X**, **Y**₀₁) does not reach the lower bound of the MSE, or the correlation coefficient (**X**, **Y**₀₂) does not reach the lower bound of the correlation coefficient, it may be determined that the transmitting-end target neural network does not satisfy the output condition.

It should be understood that the lower bound of the MSE and the lower bound of the correlation coefficient may be a lower bound that matches a capability satisfied by the target neural network. For example, the obtaining device may select a corresponding performance indicator based on a selected implementable capability measurement value satisfied by the target neural network, to evaluate the target neural network.

It should be further understood that the foregoing two output results **Y**₀₁ and **Y**₀₂ may be obtained by processing same air interface information by two different reference neural networks. For example, one is a high-complexity deep convolutional network, and the other is a low-complexity lightweight convolutional network. This is not limited in this application.

It should be understood that there may be two or more receiving-end reference neural networks cascaded with the transmitting-end target neural network. This is not limited in this application.

For example, more receiving-end reference neural networks are cascaded with the transmitting-end target neural network. Apart (for example, denoted as a receiving-end reference neural network set 1) of the receiving-end reference neural networks may be a neural network designed based on obtaining a lower limit of performance, and the other part (for example, denoted as a receiving-end reference neural network set 2) may be a neural network designed based on obtaining an upper limit of performance. Therefore, output results of the more receiving-end neural networks can be obtained. The output results may also be input into a performance measurement function separately with the transmitting-end data input into the transmitting-end target neural network, to obtain a plurality of performance measurement values.

In this case, for example, the output condition may be as follows: Performance measurement values of results output by the receiving-end reference neural network set 1 and the transmitting-end data reach a lower bound of a performance indicator, and performance measurement values of results output by the receiving-end reference neural network set 2 and the transmitting-end data do not exceed an upper bound of the performance indicator. Alternatively, the output condition may be as follows: Performance measurement values of results output by the receiving-end reference neural network set 1 and the transmitting-end data reach a lower bound of a performance indicator, and more than 90% of performance measurement values of results output by the receiving-end reference neural network set 2 and the transmitting-end data do not exceed an upper bound of the performance indicator; or the like. For brevity, details are not described herein again. It should be understood that specific content of the output condition is not limited in this application.

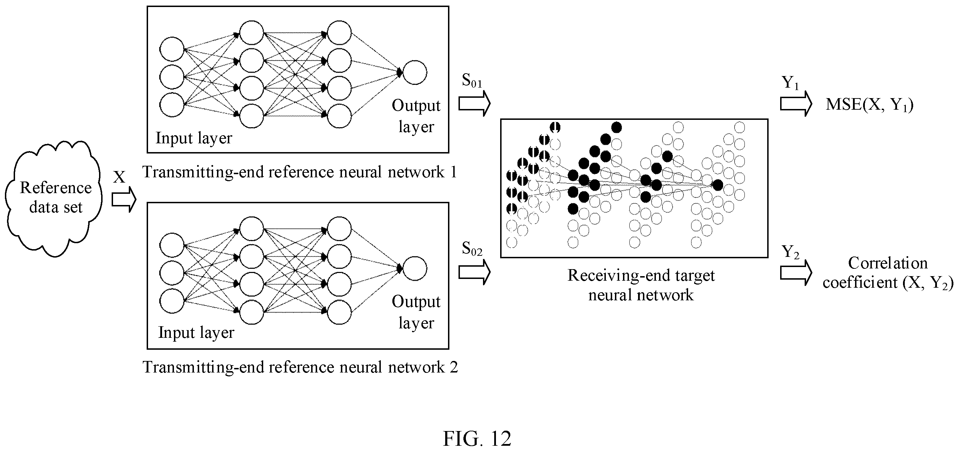

FIG. 12 shows a specific process in which an obtaining device determines, with reference to two standardized reference neural networks, whether a target neural network satisfies an output condition. In FIG. 12, the target neural network may be cascaded with the reference neural networks. The target neural network is used in a receiver, and is a receiving-end target neural network. The reference neural networks are used in a transmitter, and are transmitting-end reference neural networks. One (for example, a reference neural network 1 in the figure) of the two reference neural networks shown in FIG. 12 may be a neural network specified based on obtaining a lower limit of specific performance (for example, an MSE), and the other (for example, a reference neural network 2 in the figure) is a neural network specified based on obtaining a lower limit of other performance (for example, a correlation coefficient). Air interface information **S**₀₁, may be obtained by using the transmitting-end reference neural network 1, and air interface information **S**₀₂ may be obtained by using the transmitting-end neural network 2. The receiving-end target neural network may separately obtain output results **Y**₁ and **Y**₂ based on the receiving-end neural network operation procedure shown in FIG. 2 and the air interface information **S**₀₁ and **S**₀₂. Based on the foregoing method, the obtaining device may input, into a performance measurement function, transmitting-end data **X** input into the transmitting-end reference neural network and the output results **Y**₁ and **Y**₂ separately obtained by the receiving-end target neural network based on the air interface information **S**₀₁ and **S**₀₂, to obtain a performance measurement value, and further determine, according to a performance determining criterion and the performance measurement value, whether the target neural network satisfies the output condition.

The performance measurement function shown in FIG. 12 includes an MSE and a correlation coefficient. A performance measurement value correlation coefficient (**X**, **Y**₂) can be obtained by using the transmitting-end data **X** and the output result **Y**₂. The obtaining device further determines, with reference to a lower bound of a standardized MSE and a lower bound of a standardized correlation coefficient, whether the receiving-end target neural network satisfies the output condition. Because the determining process has been described in detail above with reference to the performance determining criterion, for brevity, details are not described herein again.

Determining, by using an upper bound and a lower bound of a performance indicator, whether a target neural network satisfies an output condition is not limited to the foregoing manner of cascading the target neural network to one reference neural network. A training device may alternatively input one or more pieces of transmitting-end data to a transmitting-end target neural network and a transmitting-end reference neural network, and compare an output result of the transmitting-end target neural network with an output result of the transmitting-end reference neural network, to determine whether the transmitting-end target neural network satisfies an output condition.

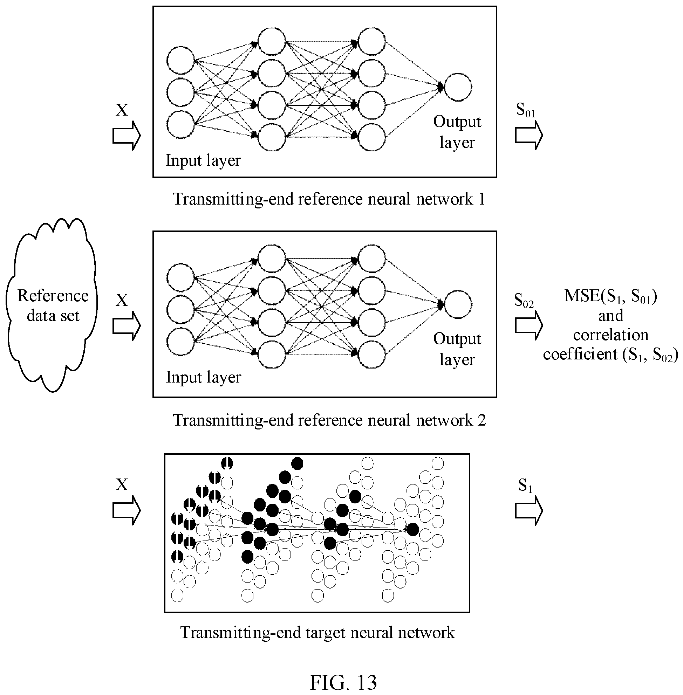

FIG. 13 shows a specific process in which an obtaining device determines, with reference to two standardized reference neural networks, whether a target neural network satisfies an output condition. Both the target neural network and the reference neural networks may be used in a transmitter, and are respectively a transmitting-end target neural network and transmitting-end reference neural networks.

One (for example, a transmitting-end reference neural network 1 in the figure) of the two transmitting-end reference neural networks shown in FIG. 13 may be a neural network specified based on obtaining a lower limit of specific performance (for example, an MSE), and the other (for example, a transmitting-end reference neural network 2 in the figure) is a neural network specified based on obtaining a lower limit of other performance (for example, a correlation coefficient). Same transmitting-end data X is separately input into the transmitting-end reference neural network 1, the transmitting-end reference neural network 2, and the transmitting-end target neural network. The transmitting-end reference neural network 1, the transmitting-end reference neural network 2, and the transmitting-end target neural network may separately process the transmitting-end data **X,** for example, process the transmitting-end data **X** based on the transmitting-end neural network operation procedure listed in FIG. 2, to generate different air interface information. The transmitting-end reference neural network 1 may generate reference air interface information **S**₀₁, the transmitting-end reference neural network 2 may generate reference air interface information **S**₀₂, and the transmitting-end target neural network may generate target air interface information **S**₁. Based on the foregoing method, the obtaining device inputs the target air interface information **S**₁ and the reference air interface information **S**₀₁ and **S**₀₂ into a performance measurement function, to obtain a performance measurement value, and may further determine, according to a performance determining criterion and the performance measurement value, whether the target neural network satisfies the output condition. Because the determining process has been described in detail above with reference to the performance determining criterion, for brevity, details are not described herein again.

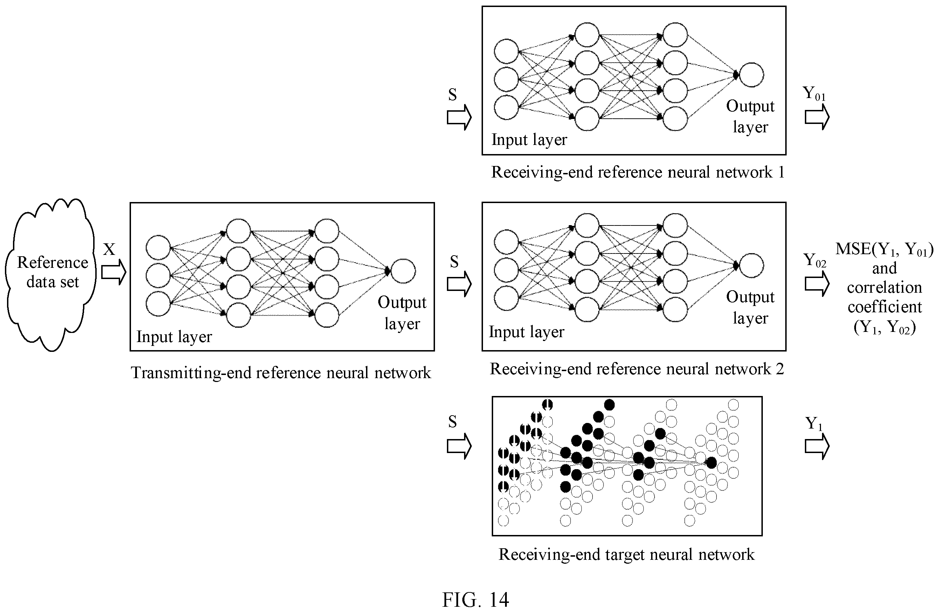

FIG. 14 shows a specific process in which an obtaining device determines, with reference to two standardized reference neural networks, whether a target neural network satisfies an output condition. The reference neural networks in FIG. 14 include a transmitting-end reference neural network used in a transmitter and receiving-end reference neural networks used in a receiver. The target neural network is used in a receiver, and is a receiving-end target neural network.

The obtaining device may input, into the transmitting-end reference neural network, transmitting-end data obtained from a reference data set. The transmitting-end reference neural network may generate air interface information S based on a standardized data interface. The air interface information S may be input into the receiving-end target neural network and two receiving-end reference neural networks. One (for example, a receiving-end reference neural network 1 in the figure) of the two receiving-end reference neural networks may be a neural network designed based on obtaining a lower limit of specific performance (for example, an MSE), and the other (for example, a receiving-end reference neural network 2 in the figure) may be a neural network designed based on obtaining a lower limit of other performance (for example, a correlation coefficient). The receiving-end reference neural network 1, the receiving-end reference neural network 2, and the transmitting-end target neural network may separately parse the air interface information **S** based on a standardized data structure, to obtain different output results. A reference output result **Y**₀₁ may be obtained by using the receiving-end reference neural network 1, a reference output result **Y**₀₂ may be obtained by using the receiving-end reference neural network 2, and a target output result **Y**₁ may be obtained by using the receiving-end target neural network. Based on the foregoing method, the obtaining device may input the target output result **Y**₁ and the reference output results **Y**₀₁ and **Y**₀₂ into a performance measurement function, to obtain a performance measurement value, and may further determine, according to a performance determining criterion and the performance measurement value, whether the receiving-end target neural network satisfies the output condition. Because the determining process has been described in detail above with reference to the performance determining criterion, for brevity, details are not described herein again.

It should be understood that, for ease of understanding only, the foregoing describes in detail a specific implementation process of step 610 with reference to FIG. 7 to FIG. 14. However, these examples are shown merely for ease of understanding, and should not constitute any limitation on this application. Based on a same conception, a person skilled in the art may perform equivalent replacement or simple variation on a part or all of the foregoing steps to achieve a same effect. Therefore, the equivalent replacement or simple variation shall fall within the protection scope of this application.

It should be further understood that, in FIG. 7 to FIG. 14, a specific process of step 610 is described mainly by using modules included in the transmitting-end neural network and the receiving-end neural network shown in FIG. 2 as examples. However, this shall not constitute any limitation on this application. When different designs are made for the modules included in the transmitting-end neural network and the receiving-end neural network, input and output of the transmitting-end neural network may be different from those shown in the figure, and input and output of the receiving-end neural network may also be different from those shown in the figure.

Thereafter, the obtaining device may perform step 620 or step 630 depending on whether the target neural network satisfies the output condition. If the target neural network satisfies the output condition, step 620 may be performed to output the target neural network. If the target neural network does not satisfy the output condition, step 630 may be performed to continue to optimize the target neural network.

A process in which the obtaining device optimizes the target neural network may specifically include but is not limited to adjusting a neural network structure design, adjusting the reference data set, adjusting the neural network training method, adjusting a definition of a cost function, a loss function, or an objective function, changing a neural network initialization method, changing a constraint condition of a neural network parameter, changing a definition of an activation function of the neural network, and the like.

By performing one or more of the foregoing listed items, the obtaining device may obtain an optimized target neural network. The obtaining device may further evaluate the optimized target neural network to determine whether the optimized target neural network satisfies the output condition. For a specific process in which the obtaining device evaluates the optimized target neural network, refer to related descriptions in step 610 above. For brevity, details are not described herein again.

Based on the foregoing technical solutions, the standardized reference data set, the standardized reference neural network, and the standardized performance determining criterion are introduced, so that the obtaining device can evaluate the target neural network based on the existing standardized reference neural network, and optimize the target neural network when the target neural network does not satisfy the output condition, until the target neural network satisfies the output condition. Therefore, overheads of downloading a neural network structure and parameter information through an air interface are avoided. In addition, interconnection between products of different vendors can be ensured. On the premise that performance is ensured, differentiated designs and competitiveness of the products of the different vendors can further be reflected. Therefore, on the whole, feasibility of implementing a dual network is greatly improved.

It should be understood that, for ease of understanding only, channel information extraction and compression and channel information reconstruction are used as examples to further describe the foregoing method in detail. However, this shall not constitute any limitation on this application. In another information processing phase listed above, the neural network obtaining method provided in embodiments of this application is still applicable. For brevity, examples are not listed one by one herein.

The target neural network obtained based on the foregoing method may be used in a communications network. For example, the transmitting-end target neural network may be used in a network device, and the receiving-end target neural network may be used in a terminal device. The network device may include the transmitter described above, and the terminal device may include the receiver described above. For another example, the transmitting-end target neural network may be used in a terminal device, and the receiving-end target neural network may be used in a network device. The terminal device may include the transmitter described above, and the network device may include the receiver described above. This is not limited in this application.

Because an air interface transmission condition between the network device and the terminal device varies with an environment in which the network device and the terminal device are located, when a target neural network is selected to be used in the network device and the terminal device, a matching scenario mode may be selected based on the current air interface transmission condition. The air interface transmission condition may include but is not limited to a channel status, an interference status, and the like.

One of the network device and the terminal device may determine the scenario mode based on the air interface transmission condition, to determine the target neural network usable in the current air interface transmission condition.

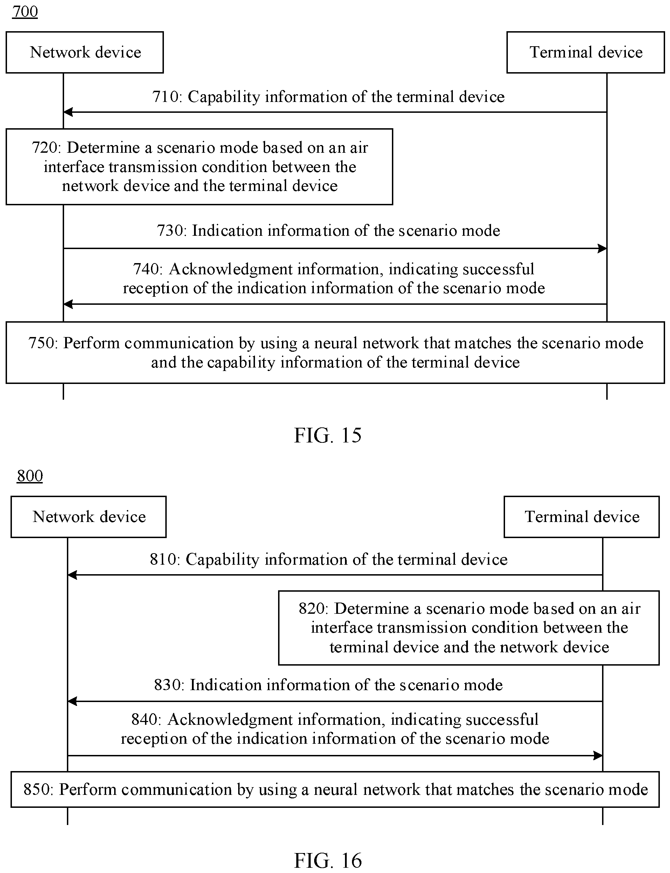

FIG. 15 is a schematic flowchart of a communication method according to an embodiment of this application. The method 700 shown in FIG. 15 may include step 710 to step 750. The following describes the steps in the method 700 in detail.

In step 710, a terminal device sends capability information of the terminal device. Correspondingly, a network device receives the capability information of the terminal device.

Specifically, the capability information may indicate an implementable capability measurement value. The implementable capability measurement value may be specifically an implementable capability measurement value of a neural network that can be used in the terminal device. The network device may select a matching neural network based on the implementable capability measurement value reported by the terminal device and a scenario mode determined based on an air interface transmission condition between the network device and the terminal device.

Specific content of the implementable capability measurement value has been described in detail in the foregoing method 600. For brevity, details are not described herein again.

In step 720, the network device determines the scenario mode based on the air interface transmission condition between the network device and the terminal device.

For example, the network device may continuously or periodically obtain the air interface transmission condition between the network device and the terminal device, for example, obtain the air interface transmission condition through channel measurement and interference measurement. Specific duration of the periodicity may be a predefined value. An actual behavior of obtaining the air interface transmission condition by the network device is not limited in this application.

The network device may determine the current scenario mode based on the air interface transmission condition between the network device and the terminal device, for example, a channel status or an interference status. For example, the scenario mode may include but is not limited to different channel scenarios such as an outdoor dense urban area, an outdoor common urban area, an outdoor rural area, an outdoor mountainous area, an indoor office, and an indoor factory; a single interference source, a plurality of interference sources, and a plurality of interference signal types with different strengths; different signal-to-noise ratio conditions of a high signal-to-noise ratio at a medium or near point and a low signal-to-noise ratio at a far point; and different moving conditions such as a low walking speed, a medium urban vehicle-mounted speed, and an ultra-high railway speed. Because different scenarios may have different impact on an air interface transmission condition, different scenario modes may be matched with different neural networks, so as to apply, to the network device and the terminal device, a neural network that matches the current air interface transmission condition. In step 730, the network device sends indication information of the scenario mode to the terminal device. Correspondingly, the terminal device receives the indication information of the scenario mode from the network device.

After determining the scenario mode, the network device may indicate the indication information of the scenario mode to the terminal device by using signaling, so that the terminal device selects a neural network coupled one-to-one to the network device to work cooperatively.

There may be a plurality of specific manners in which the network device indicates the scenario mode. For example, correspondences between a plurality of indication bits and a plurality of scenario modes may be predefined, and different indication bits indicate different scenario modes.

Optionally, the indication information of the scenario mode is carried in higher layer signaling. The higher layer signaling is, for example, a radio resource control (radio resource control, RRC) message or a medium access control (medium access control, MAC) control element (control element, CE).

That is, the scenario mode may be statically configured or semi-statically configured.

Optionally, the indication information of the scenario mode is carried in physical layer signaling. The physical layer signaling is, for example, downlink control information (downlink control information, DCI).

That is, the scenario mode may be dynamically configured.

In step 740, the network device receives acknowledgment information from the terminal device, where the acknowledgment information indicates that the indication information of the scenario mode is successfully received.

The terminal device may send the acknowledgment information to the network device based on successful reception of the indication information.

For example, the terminal device may send the acknowledgment information when the indication information is successfully received, and does not send the acknowledgment information when the indication information is not successfully received. The network device may start a timer after sending the indication information of the scenario mode. Duration of the timer may be a predefined value. If the acknowledgment information is received before the timer expires, it may be determined that the terminal device successfully receives the indication information of the scenario mode; otherwise, it is considered that the terminal device fails to receive the indication information of the scenario mode. In other words, step 740 is an optional step. If the terminal device fails to receive the indication information, the network device may not receive the acknowledgment information from the terminal device.

For another example, the acknowledgment information may be an indication bit. For example, "0" or "null (null)" indicates that the indication information fails to be received, and "1" indicates that the indication information is received successfully.

It should be understood that there may be a plurality of specific forms of the acknowledgment information. This is not limited in this application.

In step 750, the network device communicates with the terminal device by using the neural network that matches the scenario mode and the capability information of the terminal device. Correspondingly, the terminal device also communicates with the network device by using the neural network that matches the scenario mode and the capability information of the terminal device.

The network device may determine, based on the acknowledgment information, that the terminal device successfully receives the indication information. Therefore, the network device and the terminal device may work by using a transmitting-end neural network and a receiving-end neural network that match the scenario mode and the capability information of the terminal device.

For example, the network device may work by using a transmitting-end neural network that matches the scenario mode and the capability information of the terminal device, and the terminal device may work by using a receiving-end neural network that matches the scenario mode and the capability information of the terminal device. For another example, the network device may work by using a receiving-end neural network that matches the scenario mode and the capability information of the terminal device, and the terminal device may work by using a transmitting-end neural network that matches the scenario mode and the capability information of the terminal device. For still another example, the network device may work by using a transmitting-end neural network that matches a scenario mode (for example, denoted as a scenario mode 1) and capability information of the terminal device, and also work by using a receiving-end neural network that matches another scenario mode (for example, denoted as a scenario mode 2) and the capability information of the terminal device. The terminal device may work by using a receiving-end neural network that matches the scenario mode 1 and the capability information of the terminal device, and also work by using a transmitting-end neural network that matches the scenario mode 2 and the capability information of the terminal device. This is not limited in this application.

It should be understood that in a same scenario mode, there may be a transmitting-end neural network and a receiving-end neural network that matches the transmitting-end neural network. It may be understood that each transmitting-end neural network has at least one receiving-end neural network that can work cooperatively with the transmitting-end neural network, and each receiving-end neural network has at least one transmitting-end neural network that can work cooperatively with the receiving-end neural network.

It should be further understood that both the transmitting-end neural network and the receiving-end neural network may be obtained according to the method in the foregoing method 600.

If the network device determines that the terminal device fails to receive the indication information, the network device may resend the indication information, for example, may re-perform the foregoing procedure until the acknowledgment information of the terminal device is received.

It should be further understood that the network device may re-determine a scenario mode when finding that the air interface transmission condition changes, and indicate the re-determined scenario mode to the terminal device when the scenario mode changes, so that the network device and the terminal device work by using a matching neural network based on the newly determined scenario mode. That is, step 720 to step 750 may be repeatedly performed.

Based on the foregoing method, the network device may select an appropriate scenario mode based on a current air interface transmission condition between the network device and the terminal device, and indicate the scenario mode to the terminal device, so that the network device and the terminal device determine, based on a same scenario mode and capability information of the terminal device, a neural network to be used to work. In this way, performance is improved.

FIG. 16 is a schematic flowchart of a communication method according to another embodiment of this application. The method 800 shown in FIG. 16 may include step 810 to step 850. The following describes the steps in the method 800 in detail.

In step 810, a terminal device reports capability information of the terminal device. Correspondingly, a network device receives the capability information of the terminal device. In step 820, the terminal device determines a scenario mode based on an air interface transmission condition between the terminal device and the network device.

In step 830, the terminal device sends indication information of the scenario mode to the network device. Correspondingly, the network device receives the indication information of the scenario mode from the terminal device.

In step 840, the terminal device receives acknowledgment information from the network device, where the acknowledgment information indicates that the indication information of the scenario mode is successfully received.

In step 850, the terminal device communicates with the network device by using a neural network that matches the scenario mode and the capability information of the terminal device. Correspondingly, the network device communicates with the terminal device by using the neural network that matches the scenario mode and the capability information of the terminal device.

It should be understood that a specific process of step 820 to step 850 is similar to a specific process of step 720 to step 750 in the foregoing method 700. A difference lies in that in the method 800, the terminal device determines the scenario mode based on the air interface transmission condition, and indicates the scenario mode to the network device. The network device replies with the acknowledgment information based on successful reception of the indication information. Then, both the network device and the terminal device may work by using the neural network that matches the scenario mode and the capability information of the terminal device.

Because a specific process of step 720 to step 750 has been described in detail in the foregoing method 700, for brevity, details are not described herein again.

It should be understood that the terminal device may re-determine a scenario mode when finding that the air interface transmission condition changes, and indicate the re-determined scenario mode to the network device when the scenario mode changes, so that the network device and the terminal device work by using matching neural network based on the newly determined scenario mode. That is, step 810 to step 840 may also be repeatedly performed.

Based on the foregoing method, the terminal device may select an appropriate scenario mode based on a current air interface transmission condition between the terminal device and the network device, and indicate the scenario mode to the network device, so that the network device and the terminal device determine, based on a same scenario mode and capability information of the terminal device, a neural network to be used to work. In this way, performance is improved.

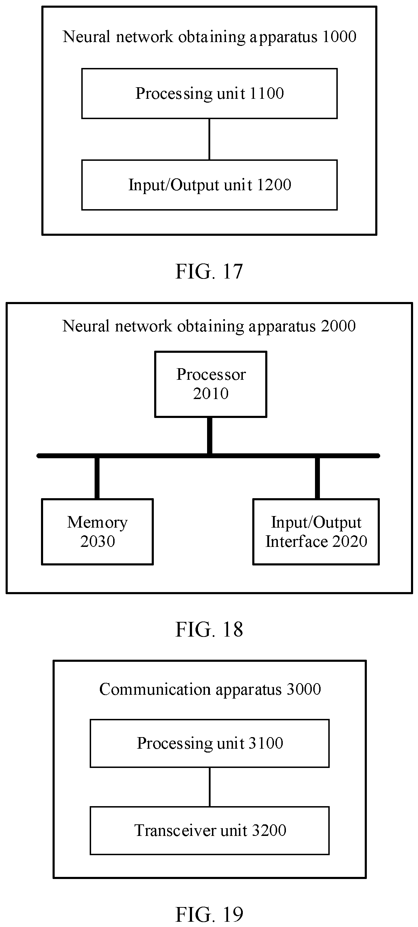

The neural network training methods in the communication network provided in embodiments of this application are described above in detail with reference to FIG. 6 to FIG. 16. The following describes in detail neural network training apparatuses in the communication network provided in embodiments of this application with reference to FIG. 17 to FIG. 20.

FIG. 17 is a schematic block diagram of a neural network obtaining apparatus 1000 according to an embodiment of this application. As shown in FIG. 17, the obtaining apparatus 1000 includes a processing unit 1100 and an input/output unit 1200. The processing unit 1100 may be configured to determine, based on a standardized reference data set, one or more reference neural networks, and a performance determining criterion, whether a constructed target neural network satisfies a preset output condition. The input/output unit 1200 may be configured to output the target neural network when the output condition is satisfied, where the output target neural network is a transmitting-end neural network used in a transmitter or a receiving-end neural network used in a receiver.

It should be understood that the apparatus 1000 may correspond to the obtaining device in the embodiments shown in FIG. 6 to FIG. 14, and may include units configured to perform the method performed by the obtaining device in the method 600 in the embodiments in FIG. 6 to FIG. 14. The processing unit 1100 may be configured to perform step 610 and step 620 in the foregoing method 600, and the input/output unit 1200 may be configured to perform step 630 in the foregoing method 600.

The steps performed by the processing unit 1100 may be implemented by one or more processors by executing corresponding programs. For example, training of the target neural network may be implemented by a processor dedicated to neural network training. The processing unit 1100 may correspond to a processor 2010 shown in FIG. 18.

The step performed by the input/output unit 1200 may be implemented, for example, by an input/output interface, a circuit, or the like. The input/output unit 1200 may correspond to, for example, an input/output interface 2020 shown in FIG. 18.

In a possible design, the apparatus 1000 may be deployed on a chip.

FIG. 18 is a schematic block diagram of a neural network obtaining apparatus 2000 according to an embodiment of this application. As shown in FIG. 18, the apparatus 2000 includes the processor 2100, the input/output interface 2200, and a memory 2030. The processor 2010, the input/output interface 2020, and the memory 2030 communicate with each other through an internal connection path. The memory 2030 is configured to store instructions. The processor 2010 is configured to execute the instructions stored in the memory 2030, to control the input/output interface 2020 to send a signal and/or receive a signal.

It should be understood that the apparatus 2000 may correspond to the obtaining device in the embodiments shown in FIG. 6 to FIG. 14, and may include units configured to perform the method performed by the obtaining device in the method 600 in the embodiments in FIG. 6 to FIG. 14. Optionally, the memory 2030 may include a read-only memory and a random access memory, and provide instructions and data to the processor. A part of the memory may further include a non-volatile random access memory. The memory 2030 may be an independent component, or may be integrated into the processor 2010. The processor 2010 may be configured to execute the instructions stored in the memory 2030. In addition, when the processor 2010 executes the instructions stored in the memory, the processor 2010 is configured to perform the foregoing steps and/or the procedures of the method embodiment corresponding to the obtaining device.

FIG. 19 is a schematic block diagram of a communication apparatus according to an embodiment of this application. As shown in FIG. 19, the communication apparatus 3000 includes a processing unit 3100 and a transceiver unit 3200.

Optionally, the communication apparatus 3000 may correspond to the terminal device in the foregoing method embodiments, for example, may be a terminal device, or a component (for example, a circuit, a chip, or a chip system) disposed in the terminal device.

It should be understood that the communication apparatus 3000 may correspond to the terminal device in the method 700 or the method 800 according to embodiments of this application. The communication apparatus 3000 may include units configured to perform the method performed by the terminal device in the method 700 in FIG. 15 or the method 800 in FIG. 16. In addition, the units in the communication apparatus 3000 and the foregoing other operations and/or functions are separately used to implement a corresponding procedure of the method 700 in FIG. 15 or the method 800 in FIG. 16.

When the communication apparatus 3000 is configured to perform the method 700 in FIG. 15, the processing unit 3100 may be configured to perform step 750 in the method 700, and the transceiver unit 3200 may be configured to perform step 710 and step 730 to step 750 in the method 700. It should be understood that a specific process in which the units perform the foregoing corresponding steps has been described in detail in the foregoing method embodiments, and for brevity, details are not described herein again.

When the communication apparatus 3000 is configured to perform the method 800 in FIG. 16, the processing unit 3100 may be configured to perform step 820 and step 850 in the method 800, and the transceiver unit 3200 may be configured to perform step 810 and step 830 to step 850 in the method 800. It should be understood that a specific process in which the units perform the foregoing corresponding steps has been described in detail in the foregoing method embodiments, and for brevity, details are not described herein again.

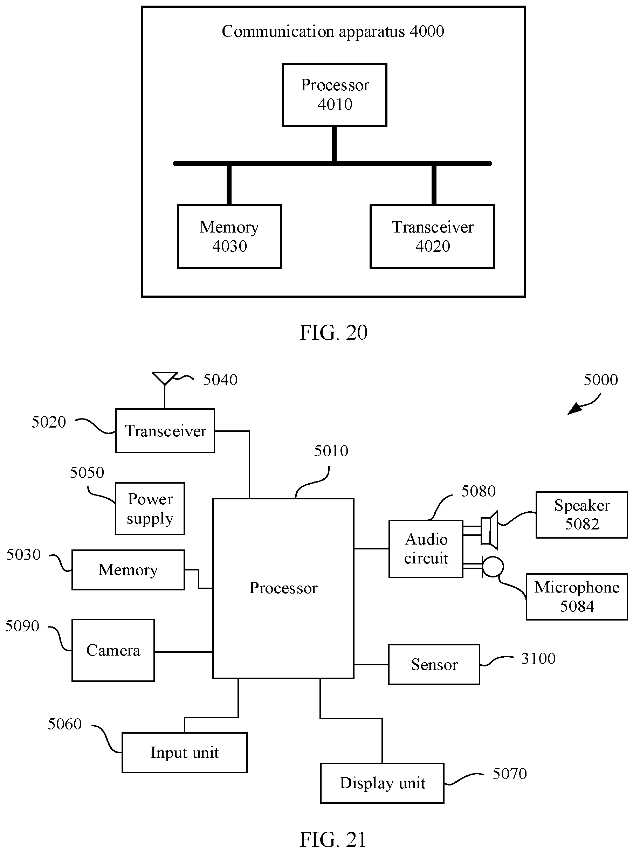

It should be further understood that when the communication apparatus 3000 is the terminal device, the transceiver unit 3200 in the communication apparatus 3000 may be implemented by a transceiver, for example, may correspond to a transceiver 4020 in a communication apparatus 4000 shown in FIG. 20 or a transceiver 5020 in a terminal device 5000 shown in FIG. 21, and the processing unit 3100 in the communication apparatus 3000 may be implemented by at least one processor, for example, may correspond to a processor 4010 in the communication apparatus 4000 shown in FIG. 20 or a processor 5010 in the terminal device 5000 shown in FIG. 21.

It should be further understood that when the communication apparatus 3000 is the chip or the chip system disposed in the terminal device, the transceiver unit 3200 in the communication apparatus 3000 may be implemented by an input/output interface, a circuit, or the like, and the processing unit 3100 in the communication apparatus 3000 may be implemented by a processor, a microprocessor, an integrated circuit, or the like integrated into the chip or the chip system.

Optionally, the communication apparatus 3000 may correspond to the network device in the foregoing method embodiments, for example, may be a network device, or a component (for example, a circuit, a chip, or a chip system) disposed in the network device.

It should be understood that the communication apparatus 3000 may correspond to the network device in the method 700 or the method 800 according to embodiments of this application. The communication apparatus 3000 may include units configured to perform the method performed by the network device in the method 700 in FIG. 15 or the method 800 in FIG. 16. In addition, the units in the communication apparatus 3000 and the foregoing other operations and/or functions are separately used to implement a corresponding procedure of the method 700 in FIG. 15 or the method 800 in FIG. 16.

When the communication apparatus 3000 is configured to perform the method 700 in FIG. 15, the processing unit 3100 may be configured to perform step 720 and step 750 in the method 700, and the transceiver unit 3200 may be configured to perform step 710 and step 730 to step 750 in the method 700. It should be understood that a specific process in which the units perform the foregoing corresponding steps has been described in detail in the foregoing method embodiments, and for brevity, details are not described herein again.

When the communication apparatus 3000 is configured to perform the method 800 in FIG. 16, the processing unit 3100 may be configured to perform step 850 in the method 800, and the transceiver unit 3200 may be configured to perform step 810 and step 830 to step 850 in the method 800. It should be understood that a specific process in which the units perform the foregoing corresponding steps has been described in detail in the foregoing method embodiments, and for brevity, details are not described herein again.

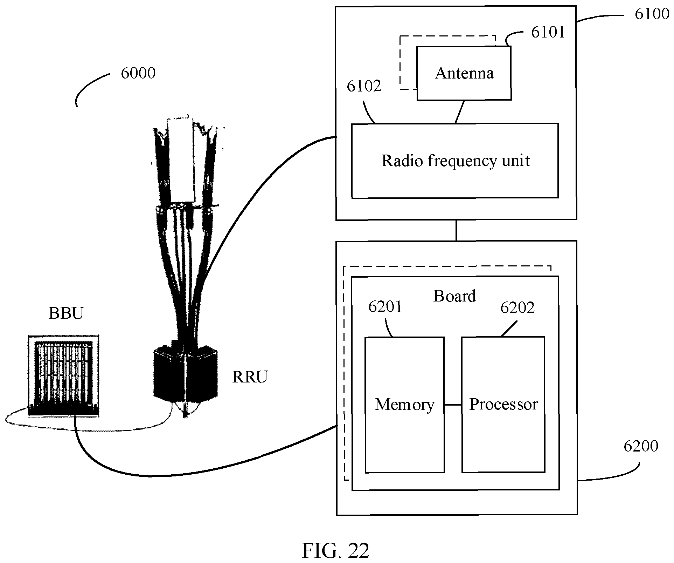

It should be further understood that when the communication apparatus 3000 is the network device, the transceiver unit 3200 in the communication apparatus 3000 may be implemented by a transceiver, for example, may correspond to a transceiver 4020 in a communication apparatus 4000 shown in FIG. 20 or an RRU 6100 in a base station 6000 shown in FIG. 22, and the processing unit 3100 in the communication apparatus 3000 may be implemented by at least one processor, for example, may correspond to a processor 4010 in the communication apparatus 4000 shown in FIG. 20 or a processing unit 6200 or a processor 6202 in the base station 6000 shown in FIG. 22.

It should be further understood that when the communication apparatus 3000 is the chip or the chip system disposed in the network device, the transceiver unit 3200 in the communication apparatus 3000 may be implemented by an input/output interface, a circuit, or the like, and the processing unit 3100 in the communication apparatus 3000 may be implemented by a processor, a microprocessor, an integrated circuit, or the like integrated into the chip or the chip system.

FIG. 20 is another schematic block diagram of the communication apparatus 4000 according to an embodiment of this application. Refer to FIG. 6. The communication apparatus 4000 includes the processor 2010, the transceiver 4020, and a memory 4030. The processor 4010, the transceiver 4020, and the memory 4030 communicate with each other through an internal connection path. The memory 4030 is configured to store instructions. The processor 4010 is configured to execute the instructions stored in the memory 4030, to control the transceiver 4020 to send a signal and/or receive a signal.

It should be understood that the communication apparatus 4000 may correspond to the terminal device in the foregoing method embodiments, and may be configured to perform the steps and/or procedures performed by the network device or the terminal device in the foregoing method embodiments. Optionally, the memory 4030 may include a read-only memory and a random access memory, and provide instructions and data to the processor. A part of the memory may further include a non-volatile random access memory. The memory 4030 may be an independent component, or may be integrated into the processor 4010. The processor 4010 may be configured to execute the instructions stored in the memory 4030. In addition, when the processor 4010 executes the instructions stored in the memory, the processor 4010 is configured to perform the foregoing steps and/or the procedures of the method embodiment corresponding to the network device or the terminal device.

Optionally, the communication apparatus 4000 is the terminal device in the foregoing embodiment.

Optionally, the communication apparatus 4000 is the network device in the foregoing embodiment.

The transceiver 4020 may include a transmitter and a receiver. The transceiver 4020 may further include an antenna. There may be one or more antennas. The processor 4010, the memory 4030, and the transceiver 4020 may be components integrated into different chips. For example, the processor 4010 and the memory 4030 may be integrated into a baseband chip, and the transceiver 4020 may be integrated into a radio frequency chip. The processor 4010, the memory 4030, and the transceiver 4020 may alternatively be components integrated into a same chip. This is not limited in this application.

Optionally, the communication apparatus 4000 is a component, for example, a circuit, a chip, or a chip system, disposed in the terminal device.

Optionally, the communication apparatus 4000 is a component, for example, a circuit, a chip, or a chip system, disposed in the network device.

Alternatively, the transceiver 4020 may be a communication interface, for example, an input/output interface or a circuit. The transceiver 4020, the processor 4010, and the memory 4020 may be integrated into a same chip, for example, integrated into a baseband chip.

FIG. 21 is a schematic diagram of a structure of the terminal device 5000 according to an embodiment of this application. The terminal device 5000 may be used in the system shown in FIG. 1, to perform the functions of the terminal device in the foregoing method embodiments. As shown in the figure, the terminal device 5000 includes the processor 5010 and the transceiver 5020. Optionally, the terminal device 5000 further includes a memory 5030. The processor 5010, the transceiver 5020, and the memory 5030 may communicate with each otherthrough an internal connection path, to transfer a control signal and/or a data signal. The memory 5030 is configured to store a computer program. The processor 5010 is configured to invoke the computer program from the memory 5030 and run the computer program, to control the transceiver 5020 to send or receive a signal. Optionally, the terminal device 5000 may further include an antenna 3040, configured to send, by using a radio signal, uplink data or uplink control signaling output by the transceiver 5020.

The processor 5010 and the memory 5030 may be combined into a processing apparatus, and the processor 5010 is configured to execute program code stored in the memory 5030 to implement the foregoing functions. During specific implementation, the memory 5030 may alternatively be integrated into the processor 5010, or may be independent of the processor 5010. The processor 5010 may correspond to the processing unit 3100 in FIG. 19 or the processor 4010 in FIG. 20.

The transceiver 5020 may correspond to the transceiver unit 3200 in FIG. 19 or the transceiver 4020 in FIG. 20. The transceiver 5020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that, the terminal device 5000 shown in FIG. 21 can implement each process of the terminal device in the method embodiment shown in FIG. 15 or FIG. 16. Operations and/or functions of the modules in the terminal device 5000 are separately intended to implement corresponding procedures in the foregoing method embodiments. For details, refer to the descriptions in the foregoing method embodiments. To avoid repetition, detailed descriptions are properly omitted herein.

The processor 5010 may be configured to perform an action that is implemented inside the terminal device and that is described in the foregoing method embodiments. The transceiver 5020 may be configured to perform a sending action by the terminal device for the network device or a receiving operation from the network device in the foregoing method embodiments. For details, refer to the descriptions in the foregoing method embodiments. Details are not described herein again.

Optionally, the terminal device 5000 may further include a power supply 5050, configured to supply power to various components or circuits in the terminal device.

In addition, to improve functions of the terminal device, the terminal device 5000 may further include one or more of an input unit 5060, a display unit 5070, an audio circuit 5080, a camera 5090, a sensor 5100, and the like, and the audio circuit may further include a speaker 5082, a microphone 5084, and the like.

FIG. 22 is a schematic diagram of a structure of a network device according to an embodiment of this application, for example, may be a schematic diagram of a structure of a base station. The base station 6000 may be used in the system shown in FIG. 1, to perform the functions of the network device in the foregoing method embodiments. As shown in the figure, the base station 6000 may include one or more radio frequency units such as a remote radio unit (remote radio unit, RRU) 6100 and one or more baseband units (BBUs) (which may also be referred to as distributed units (DUs)) 6200. The RRU 6100 may be referred to as a transceiver unit, and may correspond to the transceiver unit 3200 in FIG. 19 or the transceiver 4020 in FIG. 20. Optionally, the RRU 6100 may also be referred to as a transceiver, a transceiver circuit, a transceiver, or the like, and may include at least one antenna 6101 and a radio frequency unit 6102. Optionally, the RRU 6100 may include a receiving unit and a sending unit. The receiving unit may correspond to a receiver (which is also referred to as a receiver machine or a receiver circuit), and the sending unit may correspond to a transmitter (which is also referred to as a transmitter machine or a transmitter circuit). The RRU 6100 is mainly configured to: send and receive a radio frequency signal, and perform conversion between the radio frequency signal and a baseband signal. For example, the RRU 6100 is configured to send indication information to a terminal device. The BBU 6200 is mainly configured to: perform baseband processing, control the base station, and the like. The RRU 6100 and the BBU 6200 may be physically disposed together, or may be physically disposed separately, namely, a distributed base station.

The BBU 6200 is a control center of the base station, may also be referred to as a processing unit, may correspond to the processing unit 3100 in FIG. 19 or the processor 4010 in FIG. 20, and is mainly configured to complete baseband processing functions such as channel coding, multiplexing, modulation, and spectrum spreading. For example, the BBU (the processing unit) may be configured to control the base station to perform an operation procedure related to the network device in the foregoing method embodiments, for example, generate the foregoing indication information.

In an example, the BBU 6200 may include one or more boards, and a plurality of boards may jointly support a radio access network (for example, an LTE network) having a single access standard; or may separately support radio access networks (for example, an LTE network, a 5G network, or another network) having different access standards. The BBU 6200 further includes a memory 6201 and a processor 6202. The memory 6201 is configured to store necessary instructions and data. The processor 6202 is configured to control the base station to perform a necessary action, for example, is configured to control the base station to perform the operation procedure related to the network device in the foregoing method embodiments. The memory 6201 and the processor 6202 may serve one or more boards. In other words, a memory and a processor may be disposed on each board. Alternatively, a plurality of boards may share a same memory and a same processor. In addition, a necessary circuit may further be disposed on each board.

It should be understood that the base station 6000 shown in FIG. 22 can implement each process of the network device in the method embodiment in FIG. 15 or FIG. 16. The operations and/or the functions of the modules in the base station 6000 are separately intended to implement the corresponding procedures in the foregoing method embodiments. For details, refer to the descriptions in the foregoing method embodiments. To avoid repetition, detailed descriptions are properly omitted herein.

The BBU 6200 may be configured to perform an action that is implemented inside the network device and that is described in the foregoing method embodiments. The RRU 6100 may be configured to perform a sending action by the network device for the terminal device or a receiving action by the network device for the terminal device in the foregoing method embodiments. For details, refer to the descriptions in the foregoing method embodiments. Details are not described herein again.

It should be understood that the base station 6000 shown in FIG. 22 is merely a possible form of the network device, but should not constitute any limitation on this application. The method provided in this application is applicable to a network device in another form. For example, the network device includes an AAU, and may further include a CU and/or a DU; includes a BBU and an adaptive radio unit (adaptive radio unit, ARU); or includes a BBU. Alternatively, the network device may be customer premises equipment (customer premises equipment, CPE), or may be in another form. A specific form of the network device is not limited in this application.

The CU and/or the DU may be configured to perform an action that is implemented inside the network device and that is described in the foregoing method embodiments, and the AAU may be configured to perform a sending action by the network device for the terminal device or a receiving action by the network device for the terminal device in the foregoing method embodiments. For details, refer to the descriptions in the foregoing method embodiments. Details are not described herein again.

This application further provides a processing apparatus, including at least one processor. The at least one processor is configured to execute a computer program stored in a memory, so that the processing apparatus performs the method performed by the obtaining device, the method performed by the network device, or the method performed by the terminal device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the obtaining device, the method performed by the network device, or the method performed by the terminal device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the training device in any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

In an implementation process, the steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The foregoing processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the obtaining device in the embodiment shown in FIG. 6, the method performed by the terminal device or the method performed by the network device in the embodiment shown in FIG. 15 or FIG. 16.

According to the methods provided in embodiments of this application, this application further provides a computer-readable storage medium. The computer-readable storage medium stores program code. When the program code is run on a computer, the computer is enabled to perform the method performed by the obtaining device in the embodiment shown in FIG. 6, the method performed by the terminal device or the method performed by the network device in the embodiment shown in FIG. 15 or FIG. 16.

According to the methods provided in embodiments of this application, this application further provides a system, including the foregoing one or more terminal devices and one or more network devices. A target neural network obtained by using the foregoing obtaining device is separately configured in the one or more terminal devices and the one or more network devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending or receiving step may be performed by the processing unit (the processor). For a function of a specific unit, refer to a corresponding method embodiment. There may be one or more processors.

In the foregoing embodiments, the terminal device may be used as an example of a receiving device, and the network device may be used as an example of a sending device. However, this shall not constitute any limitation on this application. For example, both the sending device and the receiving device may be terminal devices. Specific types of the sending device and the receiving device are not limited in this application.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network obtaining method, comprising:
determining, based on a standardized reference data set, one or more reference neural networks, and a performance determining criterion, whether a constructed target neural network satisfies a preset output condition; and
outputting the target neural network when the output condition is satisfied, wherein the output target neural network is a transmitting-end target neural network used in a transmitter or a receiving-end target neural network used in a receiver.

2. The method according to claim 1, wherein the method further comprises:
when the output condition is not satisfied, continuing to optimize the target neural network until an obtained target neural network satisfies the output condition.

3. The method according to claim 1 or 2, wherein the transmitting-end target neural network is used for constellation modulation, channel coding, precoding, or channel information extraction and compression; and the receiving-end target neural network is used for constellation demodulation, channel decoding, detection reception, or channel information reconstruction.

4. The method according to any one of claims 1 to 3, wherein the method further comprises:
determining, in at least one set of standardized configurations, a configuration applicable to a current application scenario of the target neural network, wherein each set of standardized configurations comprises one or more of the following: the standardized reference data set, the standardized reference neural network, a standardized data structure, a standardized performance measurement function, the standardized performance determining criterion, and a standardized implementable capability measurement value, wherein
the reference neural network comprises a receiving-end reference neural network used in the receiver and/or a transmitting-end reference neural network used in the transmitter; the data structure is used to generate and/or parse air interface information; the performance measurement function is used to generate a performance measurement value; the performance determining criterion comprises a performance indicator and the output condition of the target neural network, wherein the performance determining criterion is used to determine, based on the performance measurement value and the performance indicator, whether the target neural network satisfies the output condition; and the implementable capability measurement value is used to select a matching neural network and/or a matching performance indicator.

5. The method according to claim 4, wherein the target neural network is the transmitting-end target neural network, and the one or more reference neural networks are one or more receiving-end reference neural networks; and
the determining, based on a standardized reference data set, one or more reference neural networks, and a performance determining criterion, whether a constructed target neural network satisfies a preset output condition comprises:
inputting, into the transmitting-end target neural network, transmitting-end data obtained from the reference data set, wherein the transmitting-end target neural network is configured to process the transmitting-end data based on a predefined data structure, to generate air interface information to be sent to the one or more receiving-end reference neural networks;
obtaining one or more output results from the one or more receiving-end reference neural networks, wherein the one or more output results are obtained by the one or more receiving-end reference neural networks separately based on the received air interface information;
using the one or more output results and the transmitting-end data as input into the performance measurement function, to obtain one or more performance measurement values; and
determining, based on the one or more performance measurement values and the performance determining criterion, whether the target neural network satisfies the output condition.

6. The method according to claim 4, wherein the target neural network is the transmitting-end target neural network, and the one or more reference neural networks are one or more transmitting-end reference neural networks; and
the determining, based on a standardized reference data set, one or more reference neural networks, and a performance determining criterion, whether a constructed target neural network satisfies a preset output condition comprises:
inputting, into the transmitting-end target neural network, transmitting-end data obtained from the reference data set, wherein the transmitting-end target neural network is configured to process the transmitting-end data based on a predefined data structure, to generate target air interface information;
inputting the transmitting-end data into the one or more transmitting-end reference neural networks, wherein the one or more transmitting-end reference neural networks are configured to process the transmitting-end data based on the predefined data structure to generate one or more pieces of reference air interface information;
using the one or more pieces of reference air interface information and the target air interface information as input into the performance measurement function, to obtain one or more performance measurement values; and
determining, based on the one or more performance measurement values and the performance determining criterion, whether the target neural network satisfies the output condition.

7. The method according to claim 4, wherein the target neural network is the receiving-end target neural network, and the one or more reference neural networks are one or more transmitting-end reference neural networks; and
the determining, based on a standardized reference data set, one or more reference neural networks, and a performance determining criterion, whether a constructed target neural network satisfies a preset output condition comprises:
inputting transmitting-end data obtained from the reference data set into the one or more transmitting-end reference neural networks, wherein the one or more transmitting-end reference neural networks are configured to process the transmitting-end data based on a predefined data structure, to obtain one or more pieces of air interface information to be sent to the receiving-end target neural network;
obtaining one or more output results from the receiving-end target neural network, wherein the one or more output results are output results separately generated by the receiving-end target neural network based on the received one or more pieces of air interface information;
using the one or more output results and the transmitting-end data as input into the performance measurement function, to obtain one or more performance measurement values; and
determining, based on the one or more performance measurement values and the performance determining criterion, whether the target neural network satisfies the output condition.

8. The method according to claim 4, wherein the target neural network is the receiving-end target neural network, and the one or more reference neural networks comprise one or more transmitting-end reference neural networks and one or more receiving-end reference neural networks; and
the determining, based on a standardized reference data set, one or more reference neural networks, and a performance determining criterion, whether a constructed target neural network satisfies a preset output condition comprises:
inputting transmitting-end data obtained from the reference data set into the one or more transmitting-end reference neural networks, wherein the one or more transmitting-end reference neural networks are configured to process the transmitting-end data based on a predefined data structure, to obtain one or more pieces of air interface information to be sent to the receiving-end target neural network and the one or more receiving-end reference neural networks;
obtaining one or more target output results from the receiving-end target neural network, wherein the one or more target output results are output results separately generated by the receiving-end target neural network based on the received one or more pieces of air interface information;
obtaining one or more reference output results from the one or more receiving-end reference neural networks, wherein the one or more reference output results are output results generated by the one or more receiving-end reference neural networks respectively based on the received one or more pieces of air interface information;
using the one or more target output results and the one or more reference output results as input into the performance measurement function, to obtain one or more performance measurement values; and
determining, based on the one or more performance measurement values and the performance determining criterion, whether the target neural network satisfies the output condition.

9. The method according to any one of claims 4 to 8, wherein the performance measurement function comprises one or more of the following: a mean square error, a normalized mean square error, a mean absolute error, a maximum absolute error, a correlation coefficient, a cross entropy, mutual information, a bit error rate, or a frame error rate.

10. The method according to any one of claims 4 to 9, wherein the implementable capability measurement value comprises one or more of the following: air interface information overheads, an amount of computation required for implementing the neural network, a quantity of parameters stored for implementing the neural network, and computation precision required for implementing the neural network.

11. The method according to any one of claims 4 to 10, wherein the performance indicator comprises one or more performance indicators, and the performance determining criterion comprises determining, by comparing the performance measurement value with the one or more performance indicators, whether the output condition is satisfied.

12. A communication method, comprising:
determining, by a first device, a scenario mode based on an air interface transmission condition between the first device and a second device, wherein the scenario mode is used to determine a neural network usable in the current air interface transmission condition, the neural network is determined in a plurality of neural networks designed in advance, and each of the plurality of neural networks matches one or more scenario modes; and
sending, by the first device, indication information of the scenario mode to the second device.

13. The method according to claim 12, wherein each of the plurality of neural networks is a neural network obtained based on a standardized reference data set, a standardized reference neural network, and a standardized performance determining criterion.

14. The method according to claim 12 or 13, wherein the method further comprises:
receiving, by the first device, acknowledgment information from the second device, wherein the acknowledgment information indicates that the indication information of the scenario mode is successfully received.

15. The method according to any one of claims 12 to 14, wherein the method further comprises:
communicating, by the first device, with the second device by using the neural network matching the scenario mode.

16. The method according to any one of claims 12 to 15, wherein the first device is a network device, and the second device is a terminal device; or the first device is a terminal device, and the second device is a network device.

17. A communication method, comprising:
receiving, by a second device, indication information of a scenario mode from a first device, wherein the scenario mode is used to determine a neural network usable in a current air interface transmission condition, the neural network is determined in a plurality of neural networks designed in advance, and each of the plurality of neural networks matches one or more scenario modes;
determining, by the second device, the scenario mode based on the indication information of the scenario mode; and
determining, by the second device based on the scenario mode, the neural network usable in the air interface transmission condition.

18. The method according to claim 17, wherein each of the plurality of neural networks is a neural network obtained based on a standardized reference data set, a standardized reference neural network, and a standardized performance determining criterion.

19. The method according to claim 17 or 18, wherein the method further comprises:
sending, by the second device, acknowledgment information to the first device, wherein the acknowledgment information indicates that the indication information of the scenario mode is successfully received.

20. The method according to any one of claims 17 to 19, wherein the method further comprises:
communicating, by the second device, with the first device by using the neural network matching the scenario mode.

21. The method according to any one of claims 17 to 20, wherein the first device is a network device, and the second device is a terminal device; or the first device is a terminal device, and the second device is a network device.

22. A neural network obtaining apparatus, comprising:
a processing unit, configured to determine, based on a standardized reference data set, one or more reference neural networks, and a performance determining criterion, whether a constructed target neural network satisfies a preset output condition; and
an input/output unit, configured to output the target neural network when the output condition is satisfied, wherein the output target neural network is a transmitting-end target neural network used in a transmitter or a receiving-end target neural network used in a receiver.

23. The apparatus according to claim 22, wherein the processing unit is further configured to: when the output condition is not satisfied, continue to optimize the target neural network until an obtained target neural network satisfies the output condition.

24. The apparatus according to claim 22 or 23, wherein the transmitting-end target neural network is used for constellation modulation, channel coding, precoding, or channel information extraction and compression; and the receiving-end target neural network is used for constellation demodulation, channel decoding, detection reception, or channel information reconstruction.

25. The apparatus according to any one of claims 22 to 24, wherein the processing unit is further configured to determine, in at least one set of standardized configurations, a configuration applicable to a current application scenario of the target neural network, wherein each set of standardized configurations comprises one or more of the following: the standardized reference data set, the standardized reference neural network, a standardized data structure, a standardized performance measurement function, the standardized performance determining criterion, and a standardized implementable capability measurement value, wherein
the reference neural network comprises a receiving-end reference neural network used in the receiver and/or a transmitting-end reference neural network used in the transmitter; the data structure is used to generate and/or parse air interface information; the performance measurement function is used to generate a performance measurement value; the performance determining criterion comprises a performance indicator and the output condition of the target neural network, wherein the performance determining criterion is used to determine, based on the performance measurement value and the performance indicator, whether the target neural network satisfies the output condition; and the implementable capability measurement value is used to select a matching neural network and/or a matching performance indicator.

26. The apparatus according to claim 25, wherein the target neural network is the receiving-end target neural network, and the one or more reference neural networks comprise one or more transmitting-end reference neural networks and one or more receiving-end reference neural networks;
the input/output unit is further configured to:
input, into the transmitting-end target neural network, transmitting-end data obtained from the reference data set, wherein the transmitting-end target neural network is configured to process the transmitting-end data based on a predefined data structure, to generate air interface information to be sent to the one or more receiving-end reference neural networks;
obtain one or more output results from the one or more receiving-end reference neural networks, wherein the one or more output results are obtained by the one or more receiving-end reference neural networks separately based on the received air interface information; and
use the one or more output results and the transmitting-end data as input into the performance measurement function, to obtain one or more performance measurement values; and
the processing unit is specifically configured to:
determine, based on the one or more performance measurement values and the performance determining criterion, whether the target neural network satisfies the output condition.

27. The apparatus according to claim 25, wherein the target neural network is the transmitting-end target neural network, and the one or more reference neural networks are one or more transmitting-end reference neural networks;
the input/output unit is further configured to:
input, into the transmitting-end target neural network, transmitting-end data obtained from the reference data set, wherein the transmitting-end target neural network is configured to process the transmitting-end data based on a predefined data structure, to generate target air interface information;
input the transmitting-end data into the one or more transmitting-end reference neural networks, wherein the one or more transmitting-end reference neural networks are configured to process the transmitting-end data based on the predefined data structure to generate one or more pieces of reference air interface information; and
use the one or more pieces of reference air interface information and the target air interface information as input into the performance measurement function, to obtain one or more performance measurement values; and
the processing unit is specifically configured to:
determine, based on the one or more performance measurement values and the performance determining criterion, whether the target neural network satisfies the output condition.

28. The apparatus according to claim 25, wherein the target neural network is the receiving-end target neural network, and the one or more reference neural networks are one or more transmitting-end reference neural networks;
the input/output unit is further configured to:
input transmitting-end data obtained from the reference data set into the one or more transmitting-end reference neural networks, wherein the one or more transmitting-end reference neural networks are configured to process the transmitting-end data based on a predefined data structure, to obtain one or more pieces of air interface information to be sent to the receiving-end target neural network;
obtain one or more output results from the receiving-end target neural network, wherein the one or more output results are output results separately generated by the receiving-end target neural network based on the received one or more pieces of air interface information; and
use the one or more output results and the transmitting-end data as input into the performance measurement function, to obtain one or more performance measurement values; and
the processing unit is specifically configured to:
determine, based on the one or more performance measurement values and the performance determining criterion, whether the target neural network satisfies the output condition.

29. The apparatus according to claim 25, wherein the target neural network is the receiving-end target neural network, and the one or more reference neural networks comprise one or more transmitting-end reference neural networks and one or more receiving-end reference neural networks;
the input/output unit is further configured to:
input transmitting-end data obtained from the reference data set into the one or more transmitting-end reference neural networks, wherein the one or more transmitting-end reference neural networks are configured to process the transmitting-end data based on a predefined data structure, to obtain one or more pieces of air interface information to be sent to the receiving-end target neural network and the one or more receiving-end reference neural networks;
obtain one or more target output results from the receiving-end target neural network, wherein the one or more target output results are output results separately generated by the receiving-end target neural network based on the received one or more pieces of air interface information;
obtain one or more reference output results from the one or more receiving-end reference neural networks, wherein the one or more reference output results are output results generated by the one or more receiving-end reference neural networks respectively based on the received one or more pieces of air interface information;
use the one or more target output results and the one or more reference output results as input into the performance measurement function, to obtain one or more performance measurement values; and
the processing unit is specifically configured to:
determine, based on the one or more performance measurement values and the performance determining criterion, whether the target neural network satisfies the output condition.

30. The apparatus according to any one of claims 25 to 29, wherein the performance measurement function comprises one or more of the following: a mean square error, a normalized mean square error, a mean absolute error, a maximum absolute error, a correlation coefficient, a cross entropy, mutual information, a bit error rate, or a frame error rate.

31. The apparatus according to any one of claims 25 to 30, wherein the implementable capability measurement value comprises one or more of the following: air interface information overheads, an amount of computation required for implementing the neural network, a quantity of parameters stored for implementing the neural network, and computation precision required for implementing the neural network.

32. The apparatus according to any one of claims 25 to 31, wherein the performance indicator comprises one or more performance indicators, and the performance determining criterion comprises determining, by comparing the performance measurement value with the one or more performance indicators, whether the output condition is satisfied.

33. A communication apparatus, comprising:
a processing unit, configured to determine a scenario mode based on an air interface transmission condition between the communication apparatus and a second device, wherein the scenario mode is used to determine a neural network usable in the air interface transmission condition, the neural network is determined in a plurality of neural networks designed in advance, and each of the plurality of neural networks matches one or more scenario modes; and
a transceiver unit, configured to send indication information of the channel state mode to the second device.

34. The apparatus according to claim 33, wherein each of the plurality of neural networks is a neural network obtained based on a standardized reference data set, a standardized reference neural network, and a standardized performance determining criterion.

35. The apparatus according to claim 33 or 34, wherein the transceiver unit is further configured to receive acknowledgment information from the second device, wherein the acknowledgment information indicates that the indication information of the scenario mode is successfully received.

36. The apparatus according to any one of claims 33 to 35, wherein the processing unit is further configured to communicate with the second device by using the neural network matching the scenario mode.

37. The apparatus according to any one of claims 33 to 36, wherein the apparatus is a network device, and the second device is a terminal device; or the apparatus is a terminal device, and the second device is a network device.

38. A communication apparatus, comprising:
a transceiver unit, configured to receive indication information of a scenario mode from a first device, wherein the scenario mode is used to determine a neural network usable in a current air interface transmission condition, the neural network is determined in a plurality of neural networks designed in advance, and each of the plurality of neural networks matches one or more scenario modes; and
a processing unit, configured to: determine the scenario mode based on the indication information of the scenario mode; and determine, based on the scenario mode, the neural network usable in the air interface transmission condition.

39. The apparatus according to claim 38, wherein each of the plurality of neural networks is a neural network obtained based on a standardized reference data set, a standardized reference neural network, and a standardized performance determining criterion.

40. The apparatus according to claim 38 or 39, wherein the transceiver unit is further configured to send acknowledgment information to the first device, wherein the acknowledgment information indicates that the indication information of the scenario mode is successfully received.

41. The apparatus according to any one of claims 38 to 40, wherein the processing unit is further configured to communicate with the first device by using the neural network matching the scenario mode.

42. The apparatus according to any one of claims 38 to 41, wherein the apparatus is a terminal device, and the first device is a network device; or the apparatus is a network device, and the first device is a terminal device.

43. A computer-readable storage medium, comprising a computer program, wherein when the computer program is run on a computer, the computer is enabled to perform the method according to any one of claims 1 to 21.
